# EUROPEAN PATENT APPLICATION

(11) **EP 4 560 175 A1**
(43) Date of publication of application: **28.05.2025**
(21) Application number: 22952043.2
(22) Date of filing: 21.07.2022
(51) Int. Cl.: F16M 11/10, F16M 11/42, H04N 5/655

(54) **DISPLAY DEVICE**

(71) Applicant: LG Electronics Inc., Yeongdeungpo-gu Seoul 07336 (KR)
(72) Inventor: KIM, Yunjoo, Seoul 06772 (KR); PARK, Woosuk, Seoul 06772 (KR); KIM, Yongnam, Seoul 06772 (KR); LEE, Taeyun, Seoul 06772 (KR); LEE, Seunghyeop, Seoul 06772 (KR)
(74) Representative: Schornack, Oliver
(86) International application number: PCT/KR2022/010696
(87) International publication number: WO 2024/019194

(57) **Abstract**

A display device is provided. The display device of the present disclosure may include: a head including a display panel; and a stand including a base and supporting the head, wherein the base includes: a wheel mounted on a lower surface of the base and protruding from the lower surface; and a foot spaced apart from the wheel and coupled to the base so as to be vertically movable, wherein a protruding length of the foot protruding from the lower surface of the base may be variable.

## Description

### [TECHNICAL FIELD]

The present disclosure relates to a display device.

### [BACKGROUND ART]

With the development of the information society, there have been growing demands for various types of display devices, and in order to meet these demands, various display devices, such as a liquid crystal display (LCD) device, a Plasma Display Panel (PDP), an electroluminescent display (ELD), a vacuum fluorescent display (VFD), an organic light emitting diode (OLED), etc., have been studied and used recently.

Among them, the LCD panel includes a TFT substrate and a color substrate which are positioned opposite each other with a liquid crystal layer interposed therebetween, and displays images by using light provided by a backlight unit. Further, the OLED panel may display images by using a self-emitting organic layer deposited on a substrate on which transparent electrodes are formed.

Recently, many studies are being conducted on a structure for freely adjusting an angle or position of a display panel.

### [DETAILED DESCRIPTION OF INVENTION]

### [TECHNICAL PROBLEMS]

It is an object of the present disclosure to solve the above and other problems.

Another object may be to provide a display device including a stand for supporting a head.

Another object may be to provide a structure for freely adjusting an angle or height of a head.

Another object may be to provide a structure for freely changing a position of a stand that supports a head.

Another object may be to provide a structure for fixing a stand that supports a head to a specific position.

### [TECHNICAL SOLUTION]

In accordance with an aspect of the present disclosure for achieving the above and other objects, a display device may include: a head including a display panel; and a stand including a base and supporting the head, wherein the base includes: a wheel mounted on a lower surface of the base and protruding from the lower surface; and a foot spaced apart from the wheel and coupled to the base so as to be vertically movable, wherein a protruding length of the foot protruding from the lower surface of the base may be variable.

### [EFFECT OF INVENTION]

The display device according to the present disclosure has the following effects.

According to at least one of the embodiments of the present disclosure, a display device including a stand for supporting a head may be provided.

According to at least one of the embodiments of the present disclosure, a structure for freely adjusting an angle or height of a head may be provided.

According to at least one of the embodiments of the present disclosure, a structure for freely changing a position of a stand that supports a head may be provided.

According to at least one of the embodiments of the present disclosure, a structure for fixing a stand that supports a head to a specific position may be provided.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the spirit and scope of the present disclosure will become apparent to those skilled in the art from this detailed description.

### [BRIEF DESCRIPTION OF THE DRAWING]

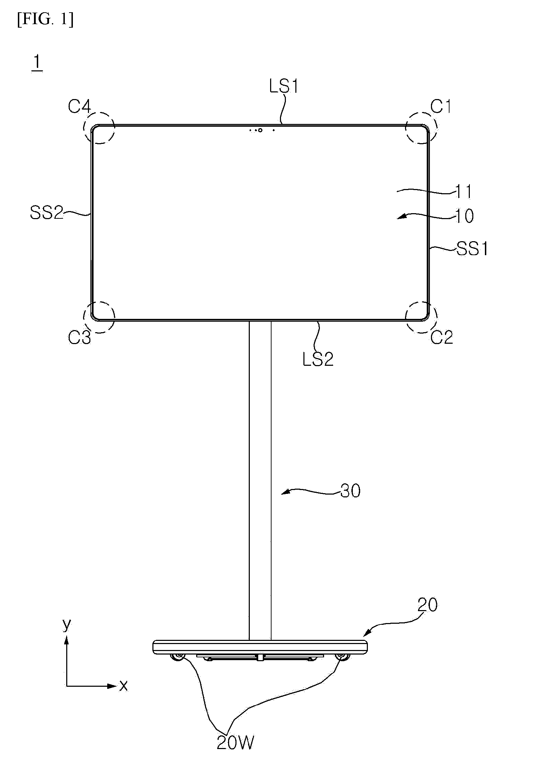

FIGS. 1 to 43 are diagrams illustrating examples of a display device according to embodiments of the present disclosure.

### [MODE FOR CARRYING OUT THE INVENTION]

Reference will now be made in detail to the preferred embodiments of the present invention, examples of which are illustrated in the accompanying drawings. Wherever possible, the same reference numbers will be used throughout the drawings to refer to the same or like parts, and a redundant description thereof will be omitted.

The suffixes, such as "module" and "unit," for elements used in the following description are given simply in view of the ease of the description, and do not have a distinguishing meaning or role.

In addition, it will be noted that a detailed description of known arts will be omitted if it is determined that the detailed description of the known arts can obscure the embodiments of the present disclosure. Further, the accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that, although the terms first, second, etc., may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

A singular representation may include a plural representation unless context clearly indicates otherwise.

It should be understood that the terms "comprise," "include," "have," etc. when used in this specification, specify the presence of stated features, integers, steps, operations, elements, components, or combinations thereof but do not preclude the presence or addition of one or more other features, integers, steps, operations, elements, components, or combinations thereof.

References to directions, such as up (U), down (D), left (Le), right (Ri), front (F), and rear (R), shown in the drawings are provided merely for convenience of explanation, and are not intended to limit the technical features disclosed in this specification.

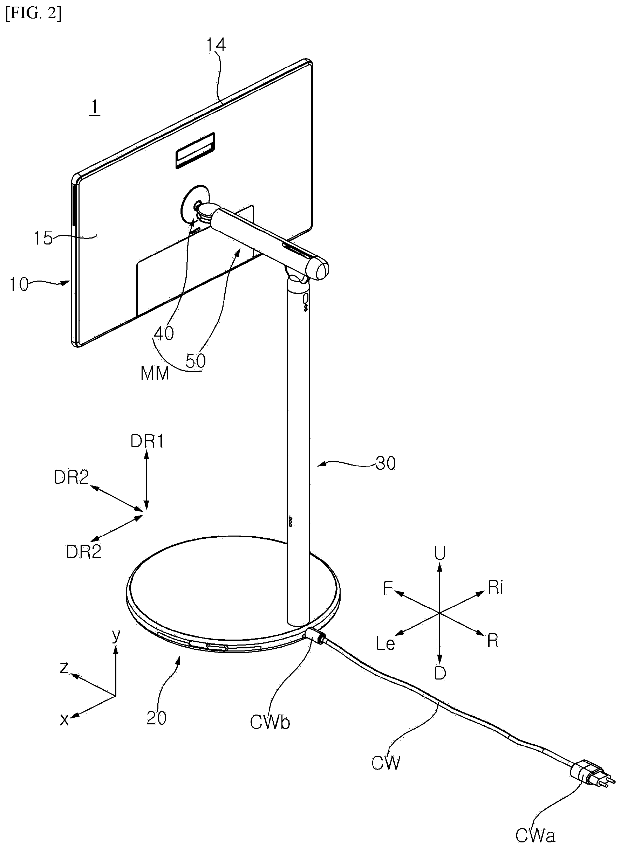

Referring to FIGS. 1 and 2, a display device 1 may include a head 10. The head 10 may display images. The head 10 may be referred to as a display 10 or a display unit 10.

The head 10 may include a first long side LS1, a second long side LS2 opposite to the first long side LS1, a first short side SS1 adjacent to the first long side LS1 and the second long side LS2, and a second short side SS2 opposite to the first short side SS1. For convenience of explanation, it is illustrated and described that the first and second long sides LS1 and LS2 are longer than the first and second short sides SS1 and SS2, but it is also possible that lengths of the first and second long sides LS1 and LS2 may be approximately equal to lengths of the first and second short sides SS1 and SS2.

A direction parallel to the short sides SS1 and SS2 of the head 10 may be referred to as a first direction DR1 or an up-down direction. A direction parallel to the long sides LS1 and LS2 of the head 10 may be referred to as a second direction DR2 or a left-right direction. A direction perpendicular to the long sides LS1 and LS2 and the short sides SS1 and SS2 of the head 10 may be referred to as a third direction DR3 or a front-rear direction.

A side on which the head 10 displays an image may be referred to as a front side F, z, and a side opposite thereto may be referred to as a rear side R. The first short side SS1 may be referred to as a left side Le, x, and the second short side SS2 may be referred to as a right side Ri. The first long side LS1 may be referred to as an upper side U, y, and the second long side LS2 may be referred to as a lower side D.

The first long side LS1, the second long side LS2, the first short side SS1, and the second short side SS2 may be referred to as edges of the head 10. Further, positions where the first long side LS1, the second long side LS2, the first short side SS1, and the second short side SS2 meet each other may be referred to as corners.

A position where the first short side SS1 and the first long side LS1 meet may be referred to as a first corner C1. A position where the first short side SS1 and the second long side LS2 meet may be referred to as a second corner C2. A position where the second short side SS2 and the second long side LS2 meet may be referred to as a third corner C3. A position where the second short side SS2 and the first long side LS1 meet may be referred to as a fourth corner C4.

The display device 1 may include a base 20, a pole 30, and a motion module MM.

The base 20 may have a generally flat cylindrical shape. The base 20 may be placed on the ground.

The pole 30 may extend vertically. A lower end of the pole 30 may be coupled to the base 20. The pole 30 may be adjacent to a circumference of the base 20.

The motion module MM may extend in a direction intersecting the pole 30. A first side of the motion module MM may be coupled to an upper end of the pole 30. A second side of the motion module MM may be coupled to a rear side of the head 10. A rotatable connector 40 may be coupled to the rear surface of the head 10, and a support arm 50 may connect the head 10 and the pole 30. The rotatable connector 40 may be referred to as a connector 40. The base 20, the pole 30, the support arm 50, and the rotatable connector 40 may be collectively referred to as a stand 20, 30, 50, and 40.

Accordingly, the head 10 may be supported by the motion module MM, the pole 30, and the base 20, and may be spaced upward from the ground.

Meanwhile, a power cable CW may be connected to an external power source. A plug CWa of the power cable CW may be connected to a concentric plug, and a jack CWb of the power cable CW may be connected to the base 20. The battery (not shown) may be installed at the base 20, the pole 30, and/or the head 10, and may be charged or discharged by power supplied through the power cable CW. By receiving power from the battery, the display device may operate while being disconnected from the power cable CW.

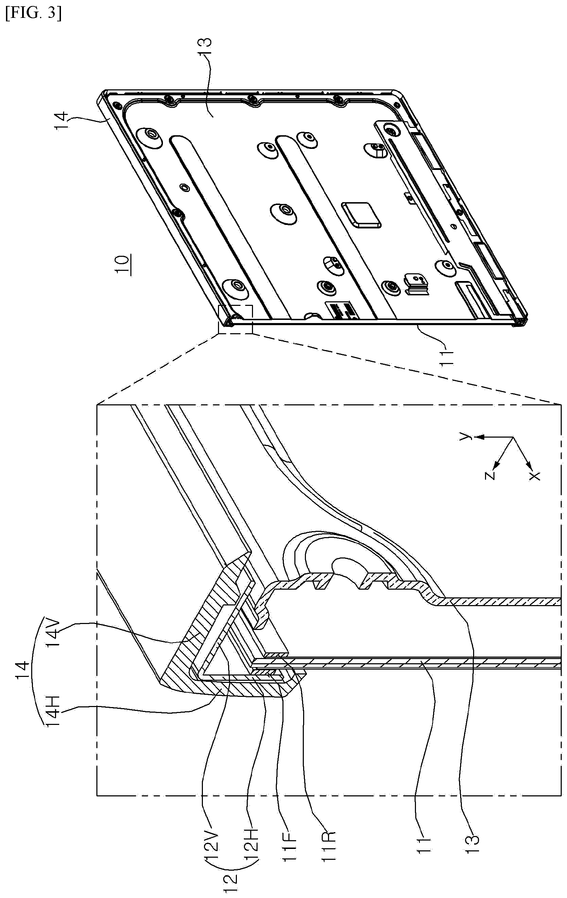

Referring to FIGS. 2 and 3, the head 10 may include a display panel 11, a middle cabinet 12, a frame 13, an end frame 14, and a back cover 15.

The display panel 11 may form a front surface of the head 10. For example, the display panel 11 may be an OLED panel, an LCD panel, or an LED panel. The display panel 11 may divide an image into a plurality of pixels and may output the image while controlling color, brightness, and chroma of the respective pixels. The display panel 11 may be divided into an active area, in which the image is displayed, and a de-active area in which the image is not displayed. The display panel 11 may generate light corresponding to red, green, or blue color in response to a control signal.

The middle cabinet 12 may extend along a perimeter of the display panel 11. A horizontal part 12H may be disposed at the front of the display panel 11. A vertical part 12V may intersect the horizontal part 12H and may cover a side surface of the display panel 11. For example, the middle cabinet 12 may include a metal or plastic material. The middle cabinet 12 may be referred to as a side frame or a guide panel.

The frame 13 may be disposed at the rear of the display panel 11. Electronic components, such as a Printed Circuit Board (PCB), may be coupled to a rear surface of the frame 13. For example, the frame 13 may include a metal material. The frame 13 may be referred to as a mount plate or a module cover.

The end frame 14 may form a perimeter of the head 10. A horizontal part 14H may be disposed at the front of the horizontal part 12H of the middle cabinet 12. A vertical part 14V may cover a side surface of the vertical part 12V of the middle cabinet 12. For example, the end frame 14 may include a metal or plastic material.

The back cover 15 may form a rear surface of the head 10. The back cover 15 may cover the rear of the frame 13 and may be coupled to the frame 13.

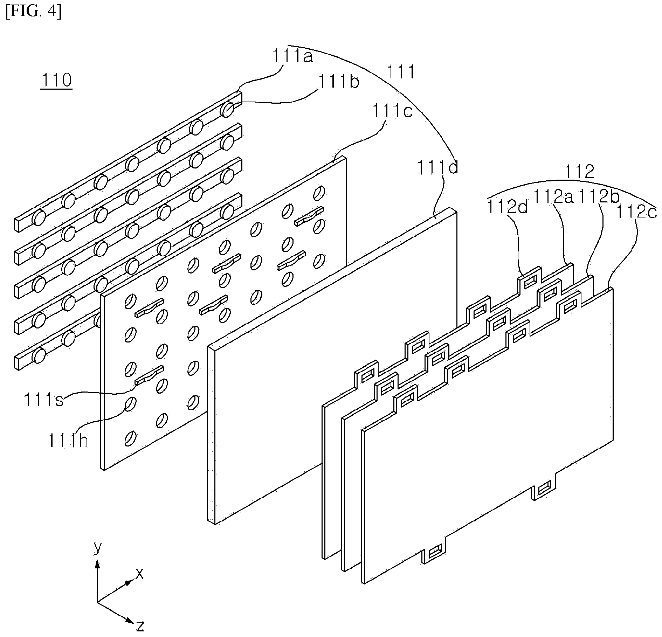

Referring to FIGS. 3 and 4, a backlight unit 110 may be disposed between the display panel 11 and the frame 13 and may be coupled to the frame 13. In this case, the display panel 11 may be referred to as an LCD panel. The backlight unit 110 may include an optical layer 111 and an optical sheet 112. The optical layer 111 may include a substrate 111a, at least one light source 111b, a reflective sheet 111c, and a diffusion plate 111d.

The substrate 111a may be coupled to a front surface of the frame 13. The substrate 111a may have a plate shape or may be formed in the shape of a plurality of straps which are vertically spaced apart from each other. The at least one light source 111b may be mounted on the substrate 111a. For example, the light source 111b may include a light emitting diode (LED). An electrode pattern for connecting the light source 111b to an adapter may be formed on the substrate 111a. The reflective sheet 111c may be disposed at the front of the substrate 111a. The reflective sheet 111c may have a hole 111h in which the light source 111b is disposed. The diffusion plate 111d may be disposed at the front of the reflective sheet 111c. A spacer 111s may support a rear surface of the diffusion plate 111d at a position between the reflective sheet 111c and the diffusion plate 111d.

The optical sheet 112 may be disposed at the front of the diffusion plate 111d. A rear surface of the optical sheet 112 may come into close contact with the diffusion plate 111d, and a front surface of the optical sheet 112 may come into close contact with or may be adjacent to the rear surface of the display panel 11. The optical sheet 112 may include at least either a diffusion sheet or a prism sheet. A coupling part 112d may be formed on at least one edge of the optical sheet 112.

Accordingly, light from the light source 111b may be provided to the display panel 11 via the diffusion plate 111d and the optical sheet 112. The display panel 11 of the present disclosure may be an OLED panel requiring no backlight unit 110 described above or may be another type of panel.

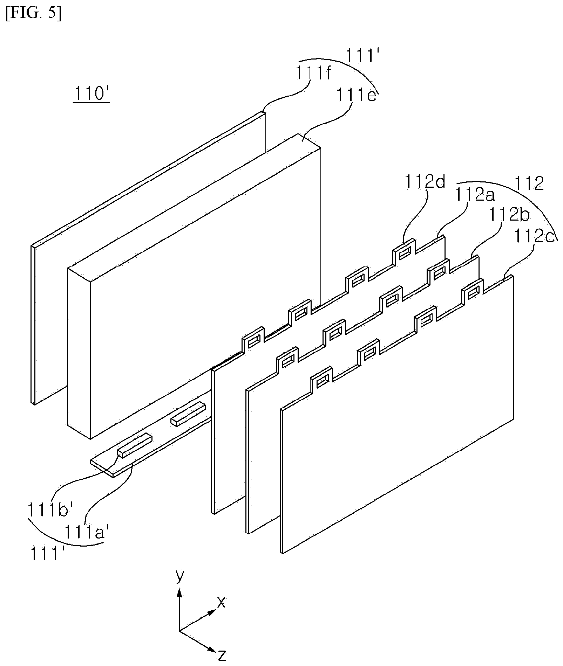

Referring to FIGS. 3 and 5, a backlight unit 110' may be disposed between the display panel 11 and the frame 13 and may be coupled to the frame 13. In this case, the display panel 11 may be referred to as an LCD panel. The backlight unit 110' may include an optical layer 111' and an optical sheet 112. The optical layer 111' may include a substrate 111a', at least one light source 111b', a reflective sheet 111f, and a light guide plate 111e. The light guide plate 111e may be disposed between the frame 13 and the optical sheet 112 and may be supported by the frame 13.

The substrate 111a' may be adjacent to a periphery of the light guide plate 111e and may be coupled to the frame 13. The at least one light source 111b' may be mounted on the substrate 111a'. For example, the light source 111b' may include a light emitting diode (LED). An electrode pattern for connecting the light source 111b' to an adapter may be formed on the substrate 111a'. The reflective sheet 111f may be disposed between the frame 13 and the light guide plate 111e and may be supported by the frame 13.

Accordingly, light from the light source 111b' may be provided to the display panel 11 via the light guide plate 111e and the optical sheet 112. Meanwhile, the display panel 11 of the present disclosure may be an OLED panel requiring no backlight unit 110' described above or may be another type of panel.

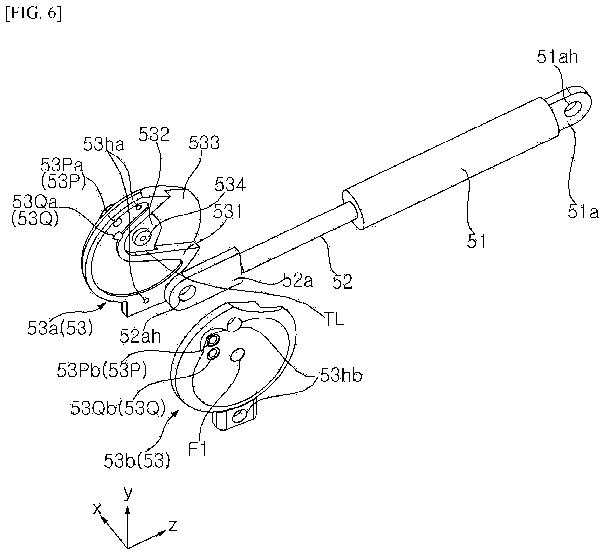

Referring to FIG. 6, a gas spring 51 and 52 may include a cylinder 51 and a piston rod 52 connected to the cylinder 51. The cylinder 51 may be closed at both ends. The piston rod 52 may extend in a longitudinal direction of the cylinder 51 and may have a smaller diameter than the cylinder 51. A portion of the piston rod 52 may be inserted into the cylinder 51.

As the gas spring 51 and 52, an existing gas spring structure filled with pressurized gas (e.g., compressed nitrogen) may be adopted. The pressurized gas may be filled in the cylinder 51. The piston rod 52 may pass through one surface of the cylinder 51 and may have a piston fixed to a distal end thereof. The piston may be disposed in the cylinder 51, and may divide an internal space of the cylinder 51 into two spaces. The two spaces may communicate with each other through an orifice formed in the piston. An area of the one surface of the piston connected to the piston rod 52 may be smaller than an area of another surface of the piston that is opposite to the one surface. Accordingly, by controlling the flow of gas passing through the orifice, the gas spring 51 and 52 may be stretched or compressed to adjust the overall length of the gas spring 51 and 52. The gas spring 51 and 52 may be referred to as a supporter 51 and 52.

A first end fitting 51a may protrude from a distal end of the cylinder 51. A first pin hole 51ah may be formed in the first end fitting 51a. The first pin hole 51ah may be referred to as a first eyelet 51ah.

A second end fitting 52a may protrude from a distal end of the piston rod 52. A second pin hole 52ah may be formed in the second end fitting 52a. The second pin hole 52ah may be referred to as a second eyelet 52ah.

A clip 53 may include a first clip 53a and a second clip 53b. The second end fitting 52a may be sandwiched between the first clip 53a and the second clip 53b. The first clip 53a may have a generally disc shape. The first clip 53a may have grooves 532 and 533 corresponding to a moving trajectory of the second end fitting 52a. A first groove 532 may be recessed from a first surface 531 of the first clip 53a that faces the second end fitting 52a, and the second end fitting 52a may be seated in the first groove. The second groove 533 may be recessed from the first groove 532 and may be spaced apart from the second end fitting 52a. A rear pin 534 may protrude from the first groove 532 and may be inserted into the second pin hole 52ah. The second clip 53b and the first clip 53a may be laterally symmetrical to each other or may have shapes that correspond to each other.

In this case, a fastening member, such as a screw, may pass through a hole 53hb of the second clip 53b to be fastened into the hole 53ha of the first clip 53a. Accordingly, the second clip 53b may be coupled to the first clip 53a. In addition, the gas spring 51 and 52 may rotate about the rear pin 534.

Meanwhile, a second upper hole 53P and a second lower hole 53Q may be formed by penetrating the clip 53 in a thickness direction of the clip 53, and may be formed at the rear of the rear pin 534. The second upper hole 53P may be located above the second lower hole 53Q.

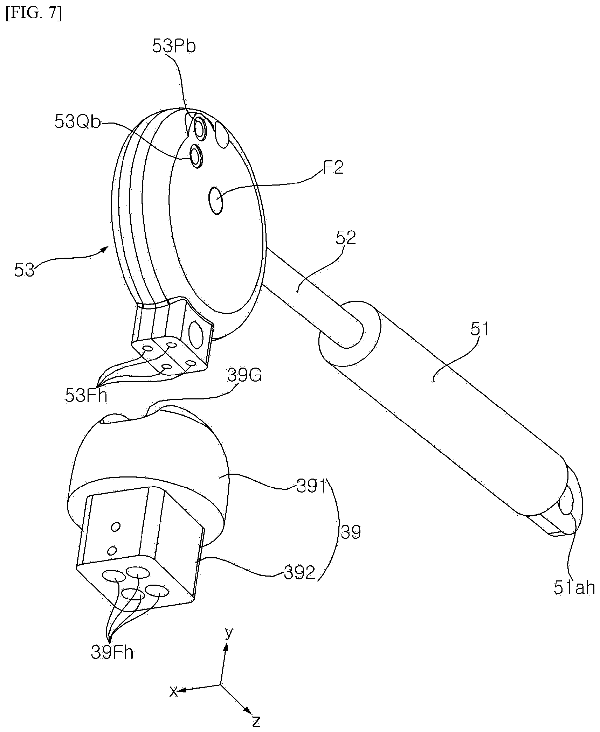

Referring to FIG. 7, a pole cap 39 may include a head 391 having a hemispherical shape and a body 392 having a cuboid shape. A lower portion of the clip 53 may be inserted into a groove 39G formed in the head 391. A fastening member, such as a screw, may pass through a hole 39Fh of the body 392 to be fastened into a hole 53Fh formed in the lower portion of the clip 53. Accordingly, the clip 53 may be secured to the pole cap 39.

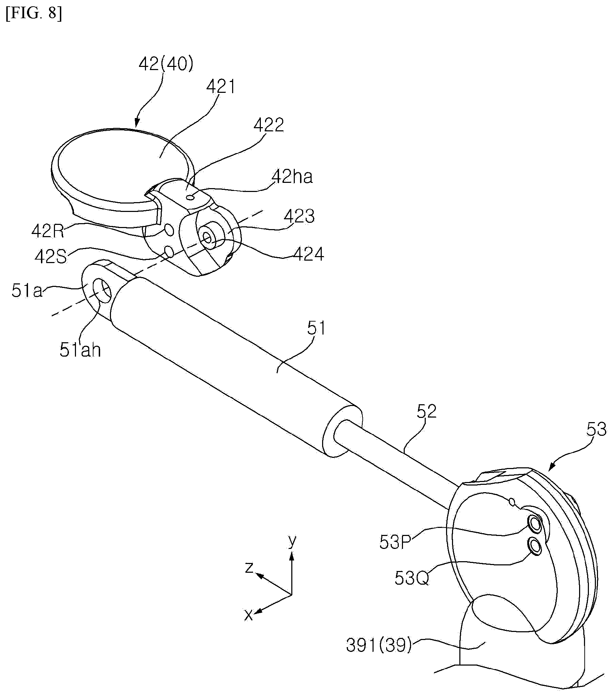

Referring to FIG. 8, a joint 42 and 43 of the rotatable connector 40 may be next to the first end fitting 51a. The joint 42 and 43 may be generally in the shape of a table tennis racket. The joint 42 and 43 may include an upper part 421 and a rear part 422.

The upper part 421 may have a circular plate shape. The rear part 422 may protrude rearward from the upper part 421. A groove 423 nay be recessed from one surface of the rear part 422 that faces the first end fitting 51a. A front pin 424 may protrude from the groove 423 and may be inserted into the first pin hole 51ah. Accordingly, the gas spring 51 and 52 may rotate about the front pin 424.

Meanwhile, a first upper hole 42R and a first lower hole 42S may be formed by penetrating the rear part 422 in a thickness direction of the rear part 422, and may be located in front of the front pin 424. The first upper hole 42R may be located above the first lower hole 42S.

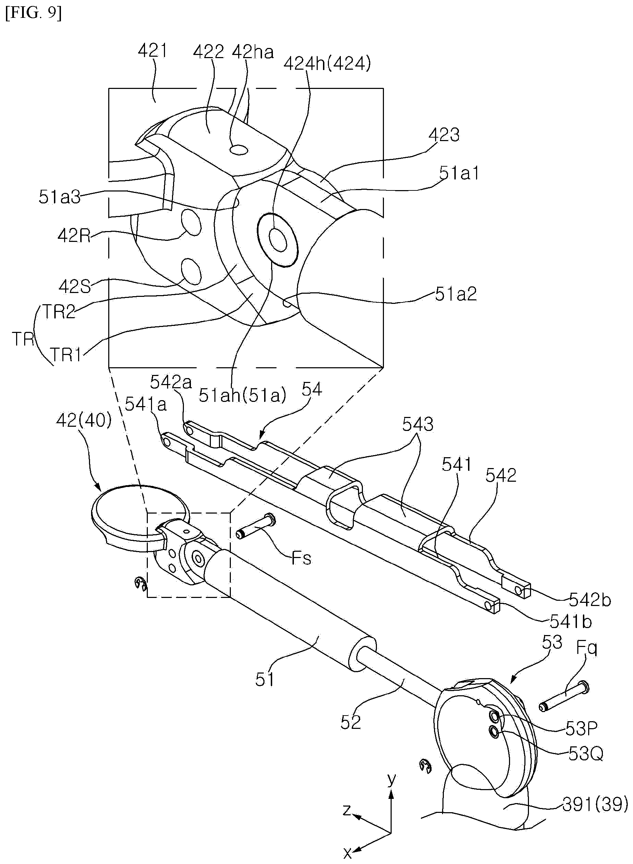

Referring to FIG. 9, a lower arm 54 may be disposed over the gas spring 51 and 52. The lower arm 54 may include a first lower bar 541, a second lower bar 542, and a lower bridge 543. The first lower bar 541 and the second lower bar 542 may be elongated and spaced apart from each other. The longitudinal direction of the lower bars 541 and 542 may correspond to the direction of a straight line connecting the first lower hole 42S and the second lower hole 53Q. The lower bridge 543 may connect an upper side of the first lower bar 541 and an upper side of the second lower bar 542.

A first lower pin Fs may sequentially pass through a first hole 542a of the second lower bar 542, the first lower hole 42S of the rear part 422, and a first hole 541a of the first lower bar 541. A first end of the lower arm 54 may be coupled to the rear part 422 by the first lower pin Fs. The lower arm 54 may rotate about the first lower pin Fs.

A second lower pin Fq may sequentially pass through a second hole 542b of the second lower bar 542, the second lower hole 53Q of the clip 53, and a second hole 541b of the first lower bar 541. A second end of the lower arm 54 may be coupled to the clip 53 by the second lower pin Fq. The lower arm 54 may rotate about the second lower pin Fq.

Accordingly, the lower arm 54 may connect the clip 53 and the joint 42 and 43. The lower arm 54 may cover a portion of the gas spring 51 and 52.

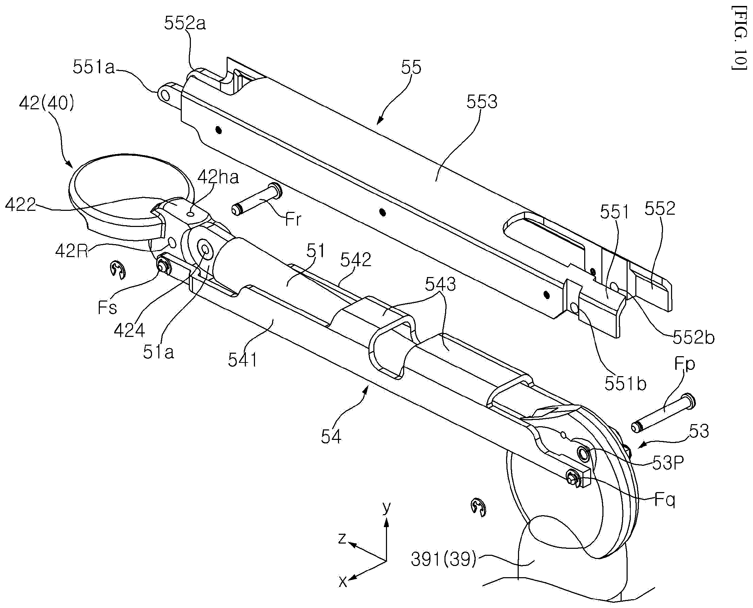

Referring to FIG. 10, an upper arm 55 may be disposed over the lower arm 54. The upper arm 55 may include a first upper bar 551, a second upper bar 552, and an upper bridge 553. The first upper bar 551 and the second upper bar 552 may be elongated and spaced apart from each other. The longitudinal direction of the upper bars 551 and 552 may correspond to the direction of a straight line connecting the first upper hole 42R and the second upper hole 53P. The upper bridge 553 may connect an upper side of the first upper bar 551 and an upper side of the second upper bar 552.

A first upper pin Fr may sequentially pass through a first hole 552a of the second upper bar 552, the first upper hole 42R of the rear part 422, and a first hole 551a of the first upper bar 551. A first end of the upper arm 55 may be coupled to the rear part 422 by the first upper pin Fr. The upper arm 55 may rotate about the first upper pin Fr.

A second upper pin Fp may sequentially pass through a second hole 552b of the second upper bar 552, the second upper hole 53P of the clip 53, and a second hole 551b of the first upper bar 541. A second end of the upper arm 55 may be coupled to the clip 53 by the second upper pin Fp. The upper arm 55 may rotate about the second upper pin Fp.

Accordingly, the upper arm 55 may connect the clip 53 and the joint 42 and 43. The upper arm 55 may cover a portion of the lower arm 54.

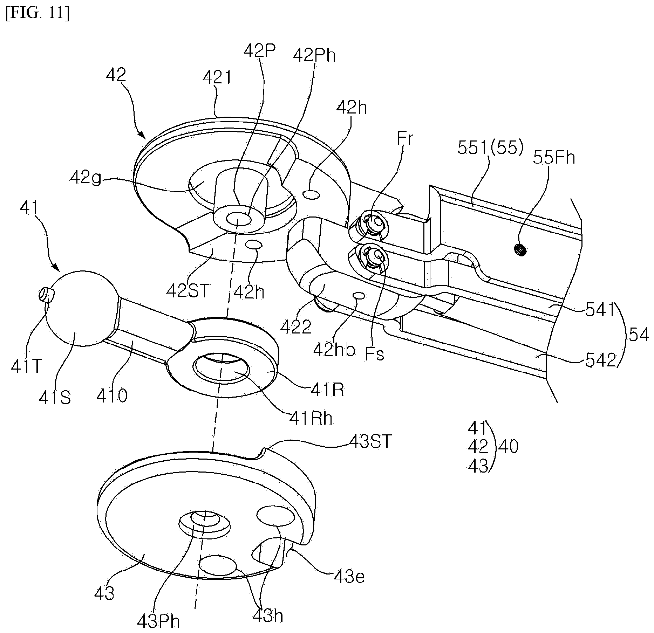

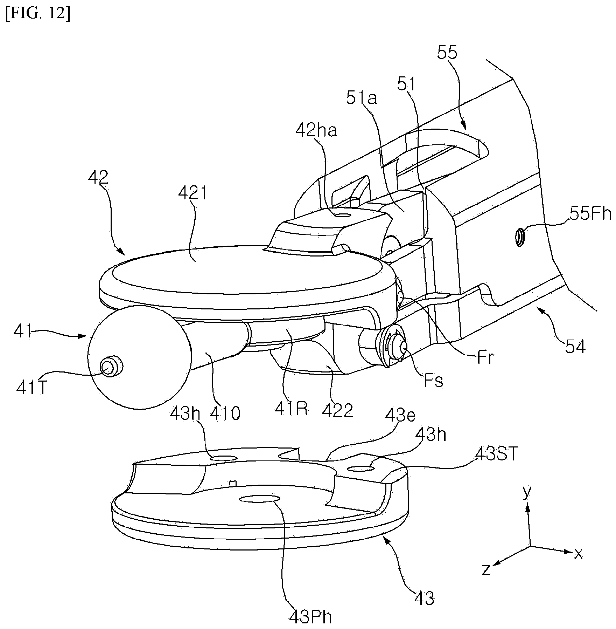

Referring to FIGS. 11 and 12, an upper protruding portion 42ST may protrude downward from a lower surface of the upper part 421 and may extend in a circumferential direction of the upper part 421. The upper protruding portion 42ST may extend along an arc of the upper part 421. An upper groove 42g may be formed in a central portion of the lower surface of the upper part 421. A vertical pin 42P may protrude downward from a central portion of the upper groove 42g.

A ball hinge 41 may be disposed under the upper part 421. The ball hinge 41 may include a body 410, a ring 41R, and a ball 41S. The ring 41R may be seated in the upper groove 42g, and the vertical pin 42P may pass through the ring 41R. The body 410 may protrude from a lateral surface of the ring 41R in a radial direction of the ring 41R. The ball 41S having a spherical shape may be coupled to a distal end of the body 410 and may be disposed outside the joint 42 and 43. For example, a projection 41T may be formed on the surface of the ball 41S and may form a distal end of the ball hinge 41.

A lower part 43 may have a circular plate shape. The lower part 43 may be opposite the upper part 421 with respect to the ball hinge 41. The lower part 43 and the upper part 421 may be vertically symmetrical to each other or may have shapes that correspond to each other. The lower protruding portion 43ST may protrude upward from an upper surface of the lower part 43 and may extend in a circumferential direction of the lower part 43. The lower protruding portion 43ST may extend along an arc of the lower part 43. An upper surface of the lower protruding portion 43ST may contact a lower surface of the upper protruding portion 42ST. A fastening member, such as a screw, may pass through a hole 43h of the lower part 43 to be fastened into a hole 42h of the upper part 421.

Accordingly, the lower part 43 may be coupled to the upper part 421, and the ball hinge 41 may be sandwiched between the lower part 43 and the upper part 421. The ball hinge 41 may rotate about the vertical pin 42P.

Meanwhile, a portion of the rear part 422 may be disposed in a cut-out (see 43e of FIG. 12) of the lower part 43 and the upper part 421.

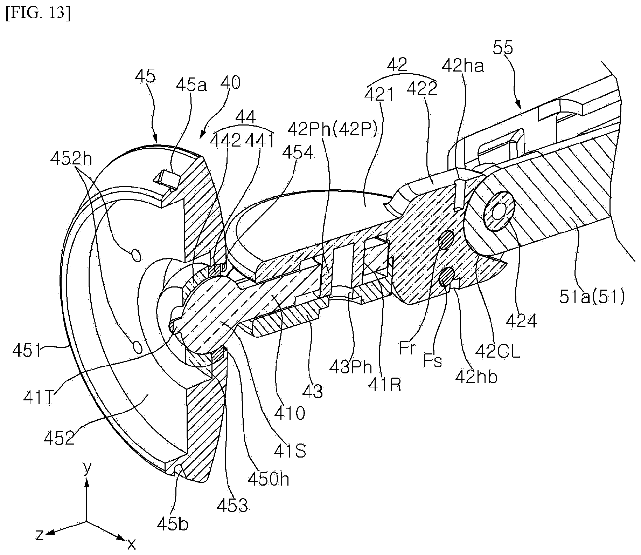

Referring to FIG. 13, a mount 45 may have a generally circular plate shape with a hole in the center thereof. A mount body 451 may form an outer circumferential surface of the mount 45, and latch grooves 45a and 45b may be formed in the outer circumferential surface of the mount 45. A first groove 452 may be formed by being recessed rearward from a front surface of the mount body 451. A second groove 453 may be formed by being recessed rearward from the center of the first groove 452 and may have a smaller width than the first groove 452. A third groove 454 may be formed by being recessed rearward from the center of the second groove 453 and may have a smaller width than the second groove 453. A mount hole 450h may be formed through the center of the third groove 454 and may have a diameter greater than or equal to that of the ball 41S. Each of the first groove 452, the second groove 453, and the third groove 454 may have a ring shape.

A half or more of the ball 41S may be disposed at the front of the third groove 454. In other words, the ball 41S may pass through the mount hole 450h, and the half or more of the ball 41S may be disposed inside the grooves 452, 453, and 454.

A friction member 44 may be disposed at the front of the third groove 454 and may contact the surface of the ball 41S. An inner surface of the friction member 44 may be formed along the surface of the ball 41S. For example, the friction member 44 may include a material, such as rubber, silicone, resin, and the like. For example, there may be two friction members 44. A first friction member 441 may be seated in the third groove 454 and may contact a stepped portion between the third groove 454 and the second groove 453. A second friction member 442 may be disposed at the front of the first friction member 441 and may contact a stepped portion between the first groove 452 and the second groove 453. An area of contact between the second friction member 442 and the ball 41S may be greater than an area of contact between the first friction member 441 and the ball 41S. The friction member 44 may be referred to as a friction washer 44.

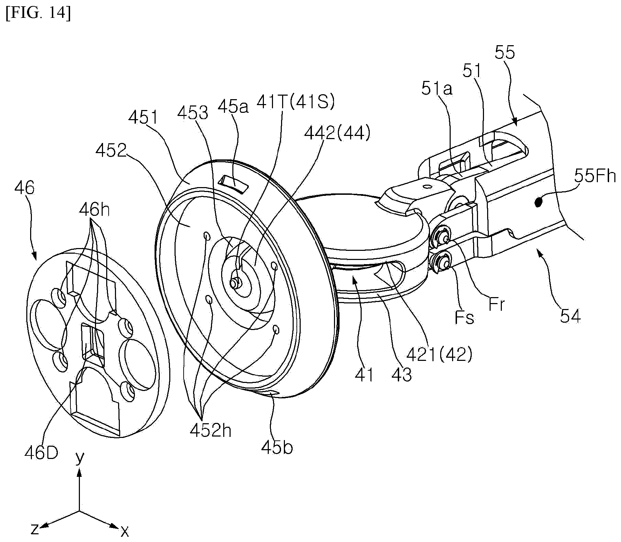

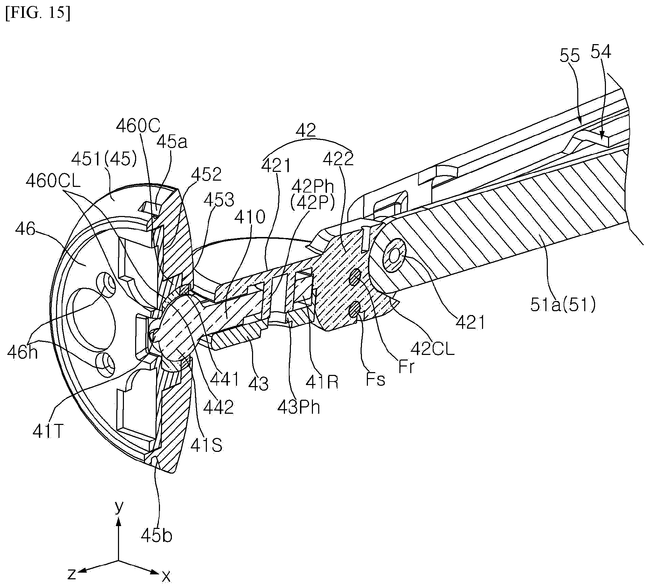

Referring to FIGS. 14 and 15, a pusher 46 may be seated in the first groove 452. A fastening member, such as a screw may pass through a hole 46h of the pusher 46 to be fastened into a hole 452h formed in the first groove 452. Accordingly, the pusher 46 may be fastened to the mount 45.

A rib 460C may protrude rearward from a rear surface of the pusher 460 and may surround a lateral surface of the friction member 44. The rib 460C may be in contact or adjacent to the second groove 453 (see FIG. 13). A portion of the rear surface of the pusher 46 and the rib 460C may contact the surface of the second friction member 44 (see a contact surface 460CL of FIG. 15). Accordingly, the pusher 46 may press the friction member 44 against the surface of the ball 41S. In addition, a frictional force of the friction member 44 on the ball 41S may be adjusted by using the fastening member that fastens the pusher 46 to the mount 45. That is, the frictional force may increase as the pusher 46 is fastened more strongly to the mount 45.

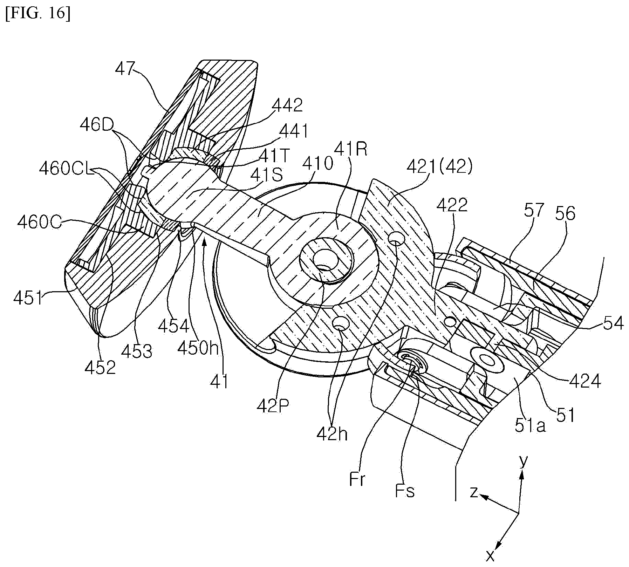

Referring to FIGS. 15 and 16, a guide hole 46D may be formed at the center of the pusher 46, and the projection 41T may be disposed in the guide hole. The perimeter of the guide hole 46D may be formed around the projection 41T, and may limit a rotation trajectory of the ball 41S, i.e., a moving trajectory of the projection 41T. The perimeter of the guide hole 46D may be referred to as a guide wall or a stopper. The guide hole 46D may be a square hole.

The rotation of the mount 45 and the pusher 46 with respect to the ball hinge 41 may be restricted as the perimeter of the guide hole 46D collides with the projection 41T. Meanwhile, in some embodiments, the projection 41T may be omitted.

A cap 47 may be coupled to or in contact with the front surface of the pusher 46. The cap 47 may cover the front surface of the pusher 46 and may be spaced apart from the projection 41T.

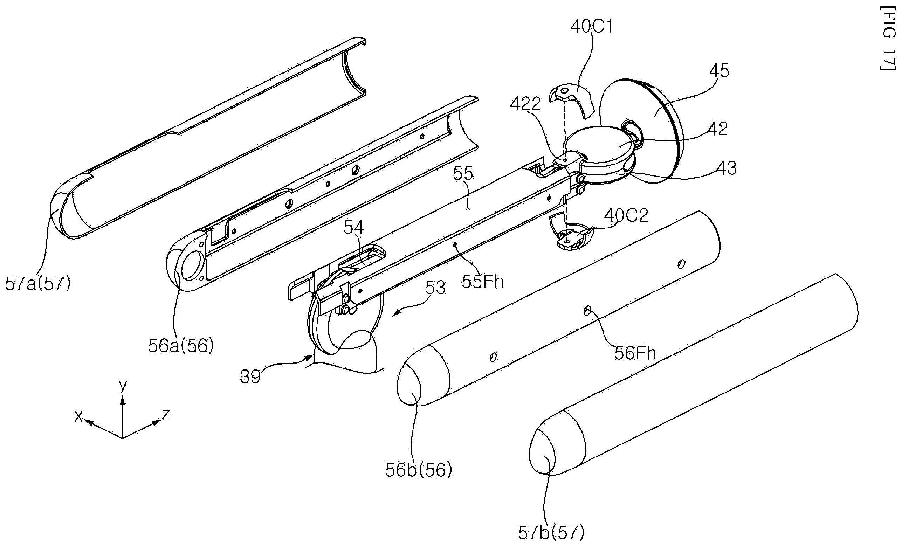

Referring to FIG. 17, an upper cover 40C1 may be disposed over the rear part 422, and a fastening member, such as a screw, may pass through the upper cover 40C1 to be fastened into an upper hole 42ha (see FIG. 10) of the rear part 422. A lower cover 40C2 may be disposed under the rear part 422, and a fastening member, such as a screw, may pass through the lower cover 40C2 to be fastened into a lower hole 40hb (see FIG. 11) of the rear part 422.

A first inner cover 56a and a second inner cover 56b may be opposite each other with respect to the upper arm 55, and a fastening member, such as a screw, may pass through a hole 55Fh of the upper arm 55 to be fastened to the inner covers 56a and 56b.

A first outer cover 57a and a second outer cover 57b may be opposite each other with respect to the inner covers 56a and 56b and may be coupled or attached to the inner covers 56a and 56b.

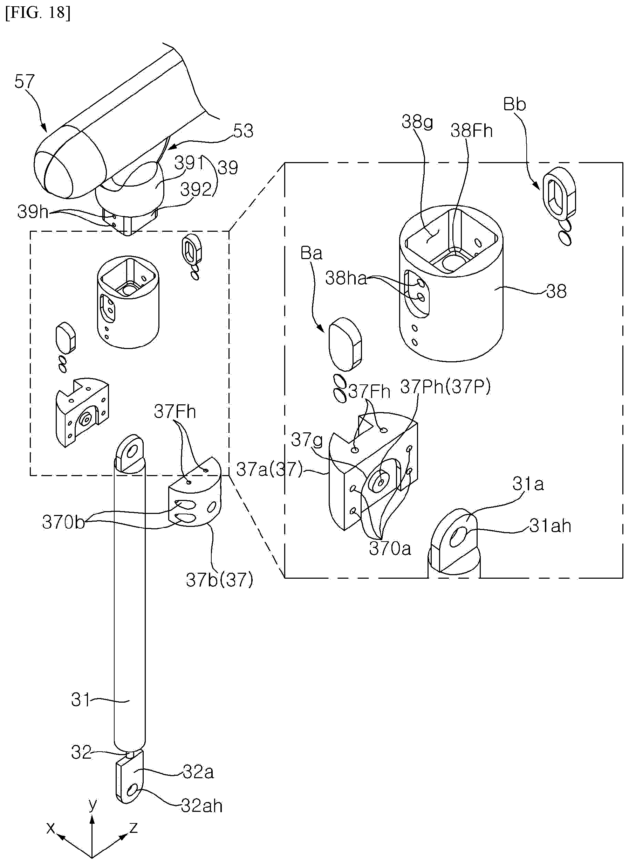

Referring to FIG. 18, a gas spring 31 and 32 may include a cylinder 31 and a piston rod 32 connected to the cylinder 31. The cylinder 31 may be closed at both ends. The piston rod 32 may extend in a longitudinal direction of the cylinder 31 and may have a smaller diameter than the cylinder 31. A portion of the piston rod 32 may be inserted into the cylinder 31.

As the gas spring 31 and 32, an existing gas spring structure filled with pressurized gas (e.g., compressed nitrogen) may be adopted. The pressurized gas may be filled in the cylinder 31. The piston rod 32 may pass through a lower surface of the cylinder 31 and may have a piston fixed to a distal end thereof. The piston may be disposed in the cylinder 31, and may divide an internal space of the cylinder 31 into two spaces. The two spaces may communicate with each other through an orifice formed in the piston. An area of the lower surface of the piston connected to the piston rod 32 may be smaller than an area of an upper surface of the piston. Accordingly, by controlling the flow of gas passing through the orifice, the gas spring 31 and 32 may be stretched or compressed to adjust the overall length of the gas spring 31 and 32. The gas spring 31 and 32 may be referred to as a supporter 31 and 32.

A first end fitting 31a may protrude from a distal end of the cylinder 31. A first pin hole 31ah may be formed in the first end fitting 31a. The first pin hole 31ah may be referred to as a first eyelet 31ah.

A second end fitting 32a may protrude from a distal end of the piston rod 32. A second pin hole 32ah may be formed in the second end fitting 32a. The second pin hole 32ah may be referred to as a second eyelet 32ah.

A block 37 may include a first block 37a and a second block 37b. The first end fitting 31a may be sandwiched between the first block 37a and the second block 37b. The first block 37a may have a semi-cylindrical shape. A first groove 37g, in which the first end fitting 31a is seated, may be formed in one surface of the first block 37a that faces the first end fitting 31a. A first pin 37P may protrude from the first groove 37g and may be inserted into the first pin hole 31ah. The second block 37b and the first block 37a may be laterally symmetrical to each other or may have shapes that correspond to each other. The block 37 may be referred to as a clip 37. A fastening member, such as a screw, may pass through a hole 370b of the second block 37b to be fastened into a hole 370a of the first block 37a. Accordingly, the second block 37b may be coupled to the first block 37a.

A holder 38 may be disposed between the block 37 and the pole cap 39. An insertion space 38g may be formed in an upper surface of the holder 38. A fastening member, such as a screw, may pass through a hole 38Fh, formed in the holder 38, through the insertion space 38g, to be fastened into a hole 37Fh of the block 37. Accordingly, the holder 38 may be coupled to the block 37. The body 392 of the pole cap 39 may be inserted into the insertion space 38g. Fastening members Ba and Bb, such as screws, may pass through a hole 38ha formed in a side surface of the pole cap 39, to be fastened into a hole 39h formed in a side surface of the body 392. Accordingly, the holder 38 may be coupled to the pole cap 39.

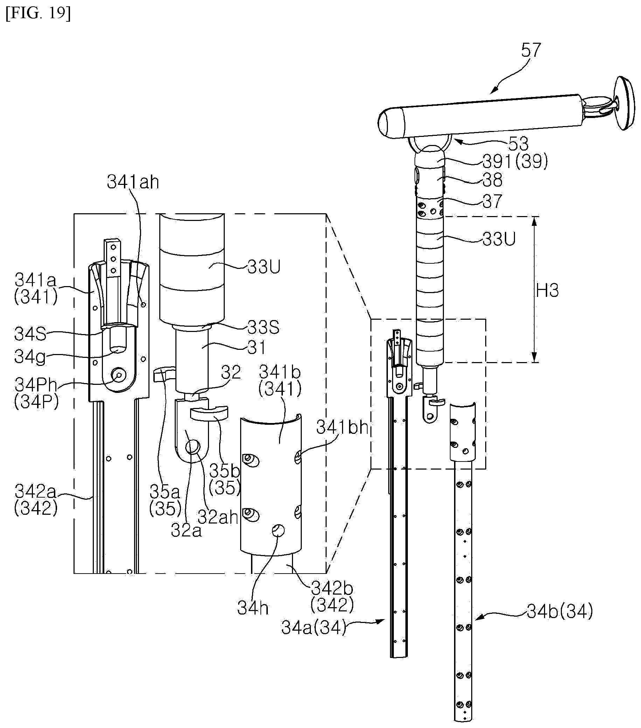

Referring to FIG. 19, a stopper 33S may be adjacent to a lower end of the cylinder 31 and may be fixed to an outer circumferential surface of the cylinder 31. An upper ring 33U, through which the cylinder 31 passes, may be disposed between the stopper 33S and the block 37. A plurality of upper rings 33U may be provided.

A spacer 35 may be adjacent to the second end fitting 32a and may be fixed to an outer circumferential surface of the piston rod 32. A thickness of the spacer 35 may be equal to a minimum distance between the second end fitting 32a and the cylinder 31.

A stem 34 may include a first stem 34a and a second stem 34b. The second end fitting 32a may be sandwiched between the first stem 34 and the second stem 34b. The first stem 34a may have a semi-cylindrical shape that is vertically elongated. A seating portion 34S may be formed on a first surface of the first stem 34a that faces the cylinder 31, and a portion of the space 35 may be seated on the seating portion. A groove 34g may be formed in the first surface of the cylinder 31, and a portion of the piston rod 32 may be located in the groove. The second end fitting 32a may be seated on the first surface of the cylinder 31. A second pin 34P may protrude from the first surface of the cylinder 31 and may be inserted in the second pin hole 32ah. The second stem 34b and the first stem 34a may be laterally symmetrical to each other or may have shapes that correspond to each other. A fastening member, such as a screw, may pass through a hole 341bh of the second stem 34b to be fastened into a hole 341ah of the first stem 34a. Accordingly, the second stem 34b may be coupled to the first stem 34a.

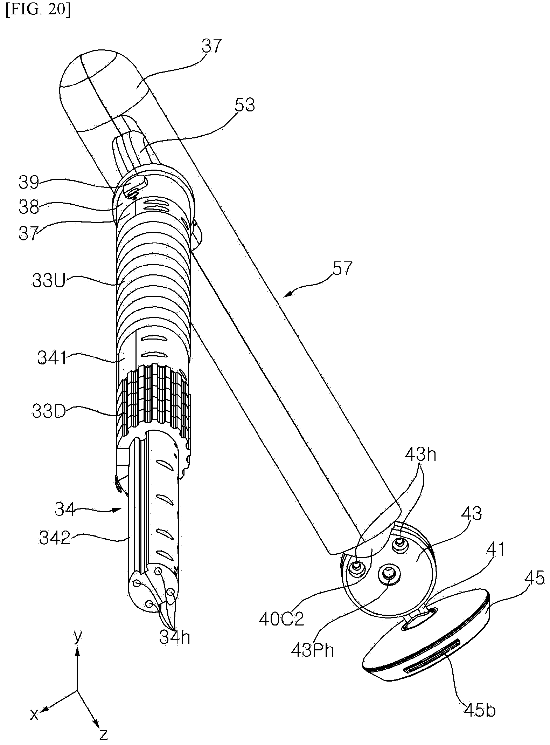

Referring to FIG. 20, the stem 34 may include a first part 341 partially covering the aforementioned gas spring 31 and 32, and a second part 342 connected to the first part 341. A diameter of the first part 341 may be greater than a diameter of the second part 342.

A lower ring 33D may be adjacent to the first part 341, and the second part 342 may pass through the lower ring. That is, the lower ring 33D may cover a portion of a lateral surface of the second part 342. A plurality of lower rings 33D may be provided.

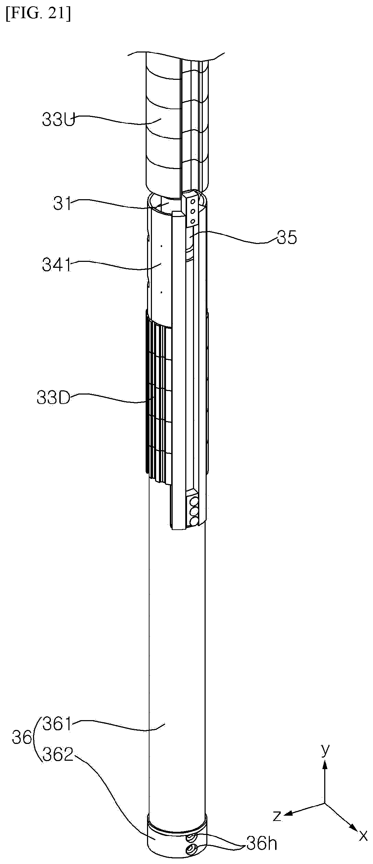

Referring to FIGS. 20 and 21, an inner sleeve 36 may be disposed under the lower ring 33D and may cover a lateral surface of the second part 342 of the stem 34. A fastening member, such as a screw, may pass through a hole 36h of the inner sleeve 36 to be fastened to the stem 34. Accordingly, the inner sleeve 36 may be coupled to the stem 34. Meanwhile, a diameter of the lower ring 33D may be greater than a diameter of the inner sleeve 36.

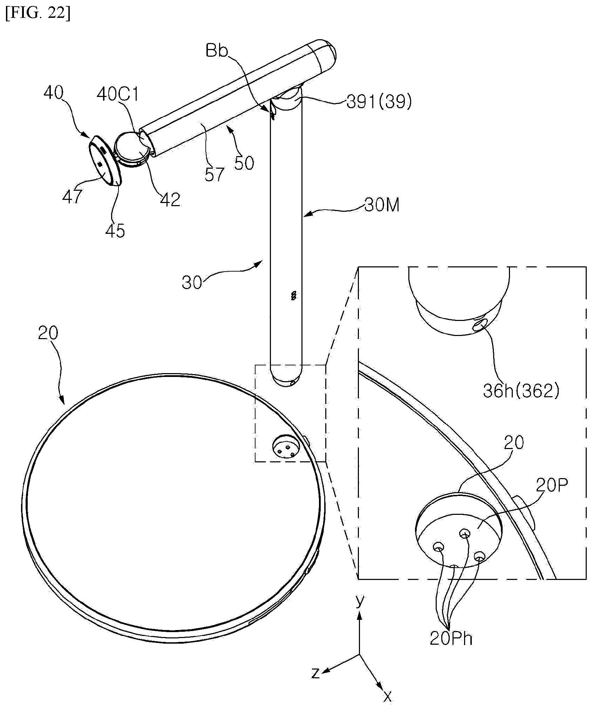

Referring to FIGS. 21 and 22, the inner sleeve 36 may include a cover part 361 and an insertion part 362. The cover part 361 may be vertically elongated and may cover most of the stem 34 (see FIG. 20). The insertion part 362 may extend downward from a lower end of the cover part 361 and may cover a remaining portion of the stem 34. A diameter of the insertion part 362 may be greater than a diameter of the cover part 361. The hole 36h may be formed in a lateral surface of the insertion part 362.

A recessed portion 20P may be formed in a top surface of the base 20. The recessed portion 20P may be formed around the base 20. The shape and diameter of the recessed portion 20P may correspond to the shape and diameter of the insertion part 363.

An outer sleeve 30M may be disposed between the insertion part 362 and the pole cap 39 and may form an outer surface of the pole 30. An upper portion of the outer sleeve 30M may be coupled to the holder 38 by the fastening members Ba and Bb (see FIG. 18). For example, the fastening members Ba and Bb may pass through the outer sleeve 30M to be coupled to the holder 38, and the head of the fastening members Ba and Bb may be held by the surface of the outer sleeve 30M.

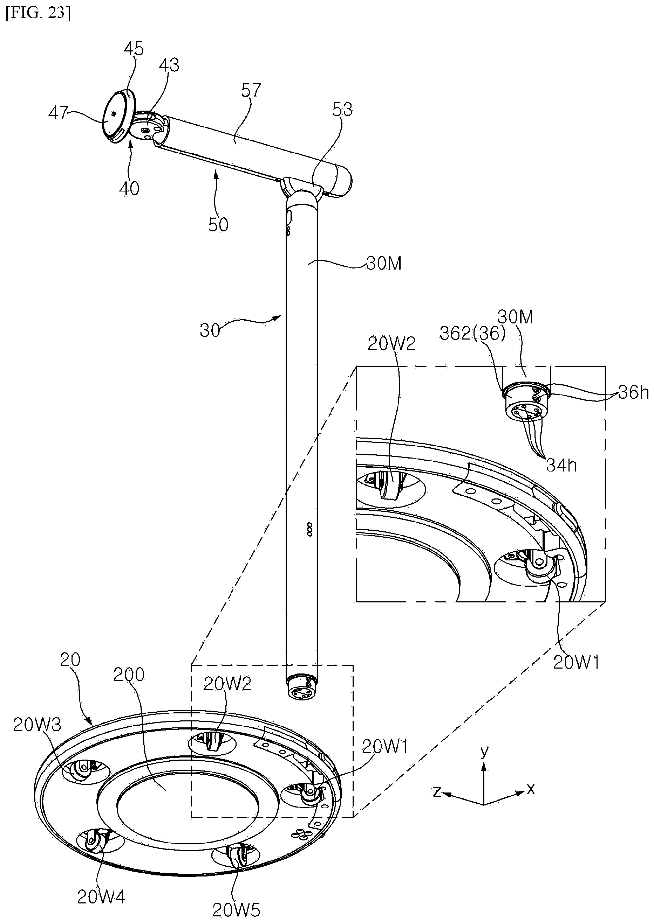

Referring to FIGS. 22 and 23, a first hole 34h may be formed at a lower end of the stem 34. A second hole 20Ph may be formed in the recessed portion 20P and may be aligned with the first hole 34h. The insertion part 362 may be inserted into the recessed portion 20P, and a fastening member, such as a screw, may pass through the second hole 20Ph from below the recessed portion 20P to be fastened into the first hole 34h. Accordingly, the pole 30 may be coupled to the base 20.

Meanwhile, in some embodiments, any one of the first hole 34h or the second hole 20Ph may be a pin hole, and a pin to be inserted into the pin hole may be located in a remaining one. The pin and the pin hole may contact each other to be electrically connected to each other. In this case, by the electric connection between the pin and the pin hole, electronic components installed in the base 20 may be electrically connected to electronic components installed in the pole 30, the support arm 50, and/or the head 10.

A plurality of wheels 20W1, 20W2, 20W3, 20W4, and 20W5 may be mounted on the lower surface of the base 20. Accordingly, a user may freely move the display device placed on the ground.

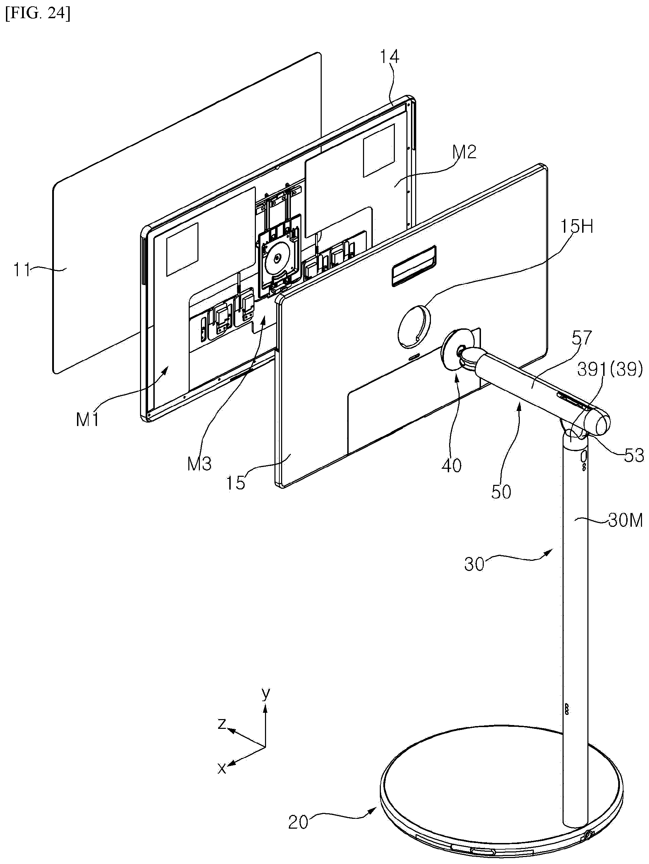

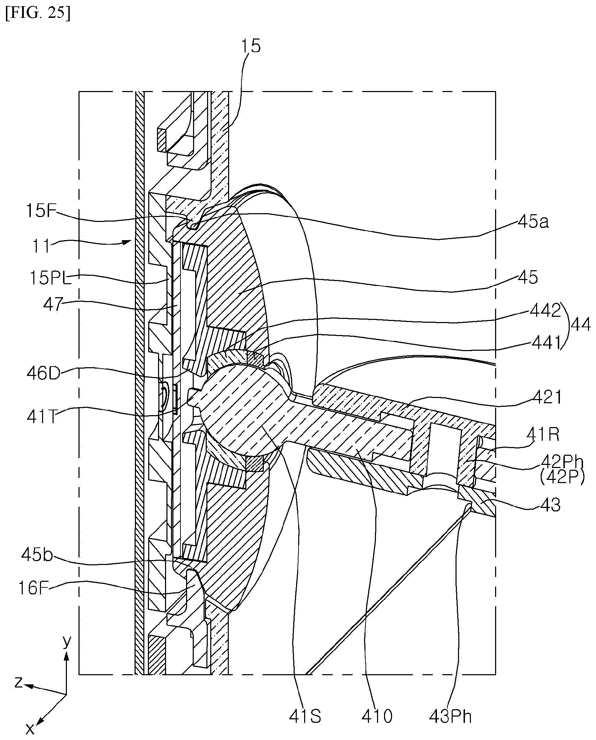

Referring to FIGS. 24 and 25, a plurality of electronic components M1, M2, and M3 may be disposed between the display panel 11 and the back cover 15. For example, the plurality of electronic components M1, M2, and M3 may be mounted on the front surface of the back cover 15. In another example, the plurality of electronic components M1, M2, and M3 may be mounted on the front surface or rear surface of the frame 13 (see FIG. 3) disposed at the front of the back cover 15. Examples of the plurality of electronic components M1, M2, and M3 are as follows.

A power supply board M1 may supply power to each component of the display device. For example, a rechargeable battery may be mounted in the head 10, the pole 30, and/or the base 20, and may be connected to the power supply board M1. A main board M2 may control the display device. A timing controller board TC may be electrically connected to the display panel 11 through a cable (not shown) and may provide a video signal to the display panel 11.

A coupling hole 15H may be formed at the center of the back cover 15 and may be aligned with the rotatable connector 40. A portion of the rotatable connector 40 may pass through the coupling hole 15H.

A first latch projection 15F may be formed on a portion of the back cover 15 that forms the perimeter of the coupling hole 15H. A second latch projection 16F may be opposite the first latch projection 15F with respect to the rotatable connector 40.

A first latch groove 45a may be formed in the mount 45, and may be engaged with the first latch projection 15F. A second latch groove 45b may be formed in the mount 45 and may be engaged with the second latch projection 16F.

Accordingly, the rotatable connector 40 may be removably coupled to the back cover 15. Alternatively, the rotatable connector 40 may also be coupled to the back cover 15 by a fastening member, such as a screw, that passes through the cap 47 to be fastened to a coupling plate 15PL. Alternatively, the rotatable connector 40 may also be coupled to the back cover 15 as a magnet provided for the cap 47 is magnetically coupled to the coupling plate 15PL (including iron (Fe) material).

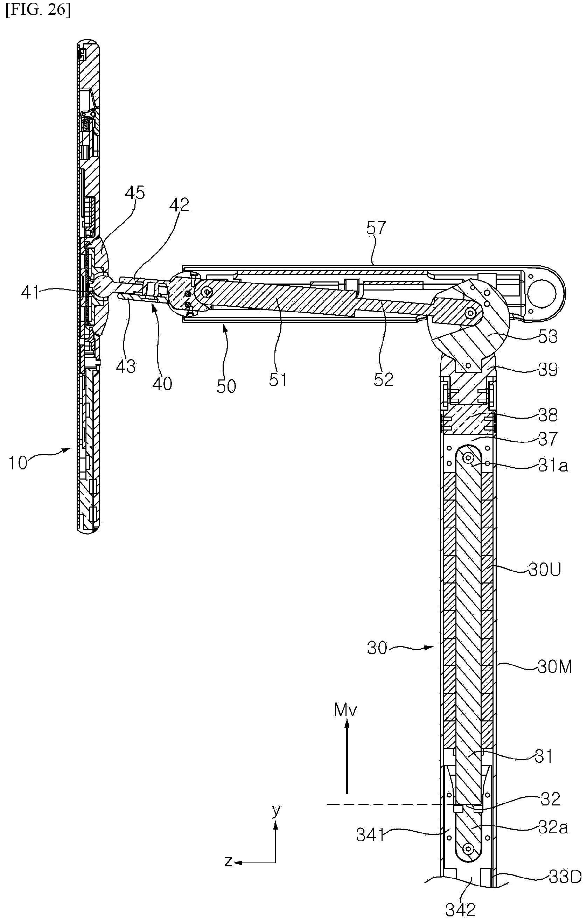

Referring to FIG. 26, the rotatable connector 40 may be coupled to the head 10, and the support arm 50 may connect the rotatable connector 40 and the pole 30.

The piston rod 32 of the gas spring 31 and 32 may be fixed to the stems 341 and 342, and the cylinder 31 of the gas spring 31 and 32 may move up and down (see Mv). Accordingly, the height of the head 10 with respect to the ground may be adjusted.

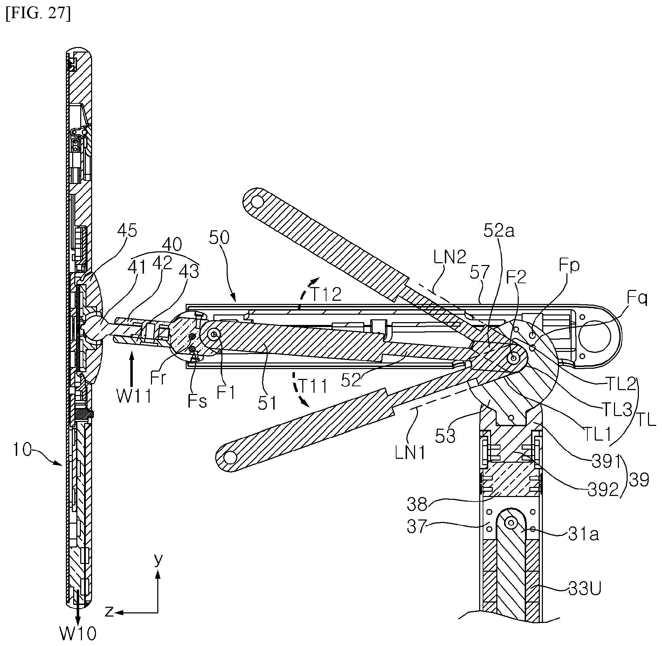

Referring to FIGS. 6 and 27, a stepped portion TL of the clip 53 may be formed between the first surface 531 and the first groove 532. The stepped portion TL may extend along a parabola. A first straight portion TL1 of the stepped portion TL may extend along a first straight line LN1. A second straight portion TL2 of the stepped portion TL may extend along a second straight line LN2. A curved portion TL3 of the stepped portion TL may connect the first straight portion TL1 and the second straight portion TL2. An angle between the first straight portion TL1 and the second straight portion TL2 may be an acute angle.

A distal end of the second end fitting 52a may contact the curved portion TL3. A curvature of the curved portion TL3 may correspond to a curvature of the distal end of the second end fitting 52a. The gas spring 51 and 52 may rotate about a second tilt axis F2 between the first straight portion TL1 and the second straight portion TL2 (see T11 and T12 of FIG. 27). The second tilt axis F2 may be a central axis of the rear pin 534. The rotation of the gas spring 51 and 52 may be restricted when the second end fitting 52a contacts the first straight portion TL1 or the second straight portion TL2. For example, in response to the tilting of the gas spring 51 and 52, the height of the head 10 may be raised upward by 90 mm or lowered downward by 90 mm from a state where the support arm 50 is parallel to the horizontal.

Meanwhile, a second upper pin Fp and a second lower pin Fq may be located behind the second tilt axis F2. The second lower pin fq may be located above the second tilt axis F2, and the second upper pin Fp may be spaced upward from the second lower pin Fq. The second upper pin Fp and the second lower pin Fq may be located on the vertical line.

Referring to FIGS. 9 and 27, a stepped portion TR may be formed between the rear part 422 and the groove 423. The stepped portion TR may extend along swoosh. The stepped portion TR may include a straight portion TR1 and a curved portion TR2.

A peripheral surface of the first end fitting 51a may include a first straight portion 51a1, a second straight portion 51a2, and a rounded portion 51a3. The first straight portion 51a1 and the second straight portion 51a2 may extend in a longitudinal direction of the gas spring 51 and 52. The rounded portion 51a3 may connect the first straight portion 51a1 and the second straight portion 51a2 and may contact the rounded portion 51a3. A curvature of the rounded portion 51a3 may correspond to a curvature of the curved portion TR2. The gas spring 51 and 52 may rotate about a first tilt axis F1. The first tilt axis F1 may be a central axis of the front pin 424. The rotation of the gas spring 51 and 52 may be restricted when the curved portion TR2 contacts the first straight portion 51a1 or the second straight portion 51a2.

Meanwhile, the first upper pin Fr and the first lower pin Fs may be located in front of the first tilt axis F1. The first upper pin Fr may be located parallel to or below the first tilt axis F1, and the first lower pin Fs may be spaced downward from the first upper pin Fr. The first upper pin Fr and the first lower pin Fs may be located on the vertical line.

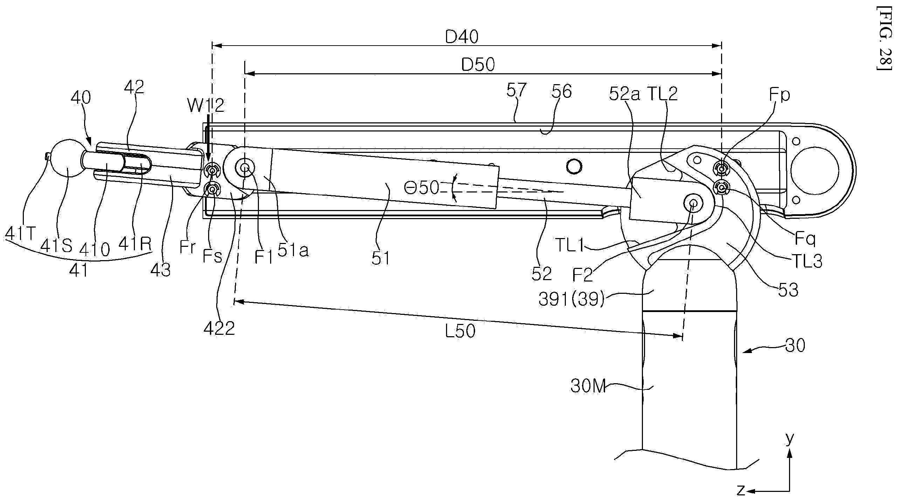

Referring to FIGS. 27 and 28, a load W10 of the head 10 may act as a reaction force W11 for the ball hinge 41, and the reaction force W11 may act as a reaction force W12 for the rear part 422.

For example, the weight of the head 10 may be 4.5 kg, and a horizontal distance D40 between the first upper pin Fr and the second upper pin Fp may be 215.5 mm. In this case, a moment to lower the rear part 422 by the load of the head 10 may be about 969.75 kgf·mm which is a value obtained by multiplying the reaction force W12 and the horizontal distance D40. For example, a horizontal distance D50 between the first tilt axis F1 and the second upper pin Fp may be 201.8 mm. In this case, a moment to raise the rear part 422 by the gas spring 51 and 52 may be a value obtained by multiplying F(Gas), sin(theta), and the horizontal distance D50, when the moment to raise is equal to the moment (969.75 kgf·mm) to lower, the head 10 may maintain balance without drooping. Here, theta may be an angle (acute angle) between the horizontal and a longitudinal direction of the gas spring 51 and 52 of the support arm 50 which is parallel to the horizontal. That is, F(Gas) indicates a force in the longitudinal direction of the gas spring 51 and 52, and may have 4.806 kgf·mm / Sin (theta) in order to maintain the balance. As theta is greater than zero (0), the gas spring 51 and 52 may be efficient in maintaining the above balance.

For example, an angle θ50 between the gas spring 51 and 52 and the horizontal may be 4.6 degrees, and the horizontal distance D50 between the first tilt axis F1 and the second upper pin Fp may be 201.8 mm. In this case, a moment to raise the rear part 422 by the gas spring 51 and 52 may be 16.2×F(Gas) kgf·mm, i.e., a value obtained by multiplying F(Gas), Sin(4.6 degrees), and the horizontal distance D50. Here, F(Gas) may indicate a force of the gas spring 51 and 52, and when corresponding to 60kg(≒ 969.75/16.2), the moment to lower the rear part 422 and the moment to raise it may be balanced.

Accordingly, while being parallel to the horizontal (see the support arm 50 positioned in the middle of T11 and T12 of FIG. 27), the support arm 50 may support the head 10 by the gas spring 51 and 52 that is tilted with respect to the longitudinal direction of the support arm 50, i.e., the horizontal direction.

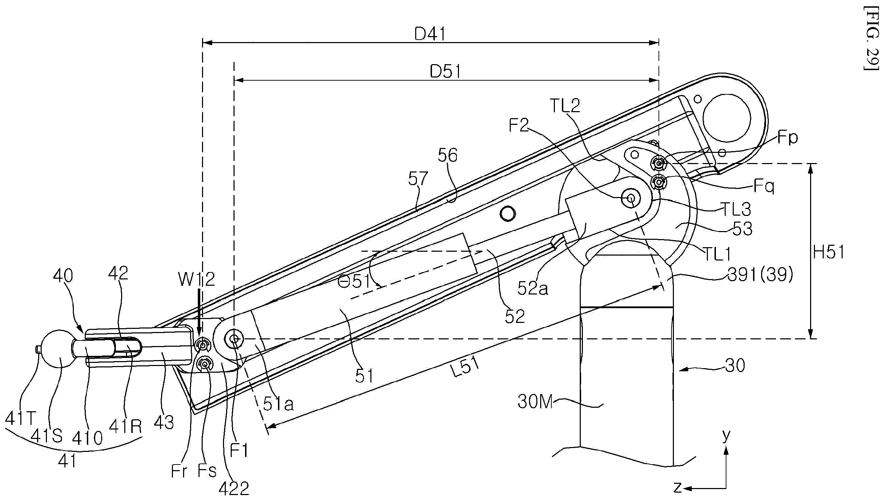

Referring to FIG. 29, the support arm 50 may be tilted about the second tilt axis F2 by 25 degrees downward from the horizontal (see T11 of FIG. 27).

For example, the weight of the head 10 may be 4.5 kg, and a horizontal distance D41 between the first upper pin Fr and the second upper pin Fp may be 202.3 mm. In this case, a moment to lower the rear part 422 by the load of the head 10 may be about 910.3 kgf·mm which is a value obtained by multiplying the reaction force W12 and the horizontal distance D41.

For example, an angle θ51 between the gas spring 51 and 52 and the horizontal may be 16.5 degrees, and a horizontal distance D51 between the first tilt axis F1 and the second upper pin Fp may be 188.7 mm, and a vertical distance H51 between the first tilt axis F1 and the second upper pin Fp may be 71.6 mm. In this case, a moment to lower the rear part 422 by the gas spring 51 and 52 may be 53.6×F(Gas) kgf·mm, i.e., a value obtained by multiplying F(Gas), Sin(16.5 degrees), and the horizontal distance D51. In addition, a moment to raise the rear part 422 by the gas spring 51 and 52 may be 68.6×F(Gas) kgf·mm, i.e., a value obtained by multiplying F(Gas), Cos(16.5 degrees), and the vertical distance H51. Here, F(Gas) may indicate a force of the gas spring 51 and 52, and when 910.3 + 53.6×F(Gas) <68.6×F(Gas), i.e., corresponding to F(Gas)>60kg, the moment to lower the rear part 422 and the moment to raise it may be balanced. In this case, a length L51 of the gas spring 51 and 52 may be smaller than a length L50 (see FIG. 28) of the gas spring 51 and 52 of the support arm 50 that is parallel to the horizontal.

Accordingly, the support arm 50 may support the head 10 while being tilted by 25 degrees downward from the horizontal (see the support arm 50 positioned at T11 in FIG. 27).

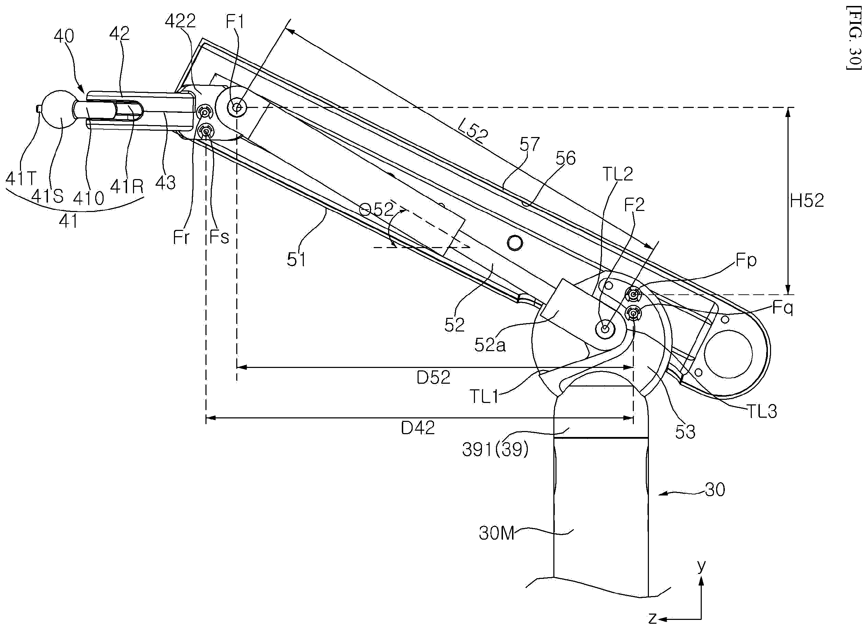

Referring to FIG. 30, the support arm 50 may be tilted about the second tilt axis F2 by 25 degrees upward from the horizontal (see T12 of FIG. 27).

For example, the weight of the head 10 may be 4.5 kg, and a horizontal distance D42 between the first upper pin Fr and the second upper pin Fp may be 202.3 mm. In this case, a moment to lower the rear part 422 by the load of the head 10 may be about 910.3 kgf·mm which is a value obtained by multiplying the reaction force W12 and the horizontal distance D42.

For example, an angle θ52 between the gas spring 51 and 52 and the horizontal may be 26.9 degrees, and a horizontal distance D52 between the first tilt axis F1 and the second upper pin Fp may be 188.7 mm, and a vertical distance H52 between the first tilt axis F1 and the second upper pin Fp may be 75.3 mm. In this case, a moment to lower the rear part 422 by the gas spring 51 and 52 may be 67.1×F(Gas) kgf·mm, i.e., a value obtained by multiplying F(Gas), Cos(26.9 degrees), and the vertical distance H52. In addition, a moment to raise the rear part 422 by the gas spring 51 and 52 may be 85.3×F(Gas) kgf·mm, i.e., a value obtained by multiplying F(Gas), Sin(26.9 degrees), and the horizontal distance D52. Here, F(Gas) may indicate a force of the gas spring 51 and 52, and when 910.3 + 67.1×F(Gas) <85.3×F(Gas), i.e., corresponding to F(Gas)>50kg, the moment to lower the rear part 422 and the moment to raise it may be balanced. In this case, a length L52 of the gas spring 51 and 52 may be greater than the length L50 (see FIG. 28) of the gas spring 51 and 52 of the support arm 50 that is parallel to the horizontal.

Accordingly, the support arm 50 may support the head 10 while being tilted by 25 degrees upward from the horizontal (see the support arm 50 positioned at T12 in FIG. 27).

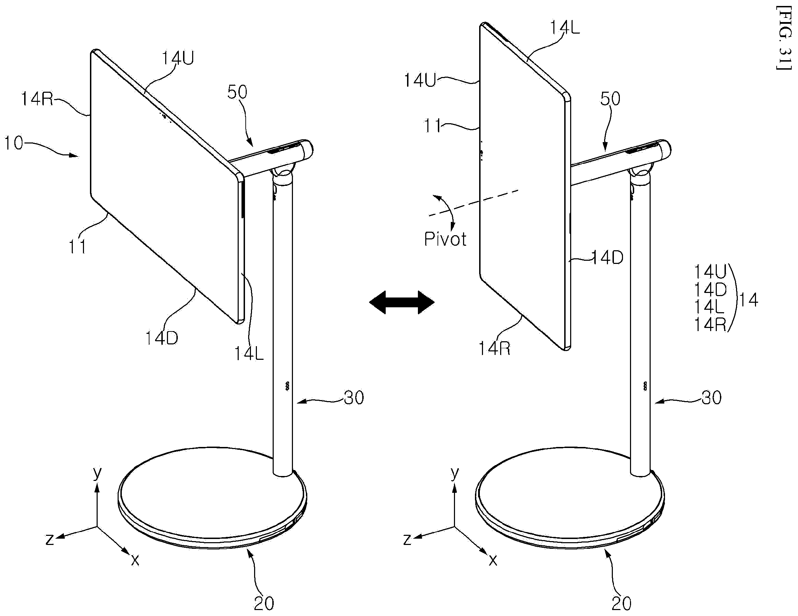

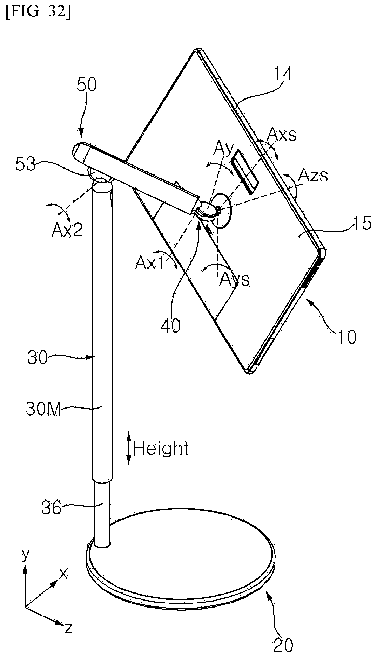

Referring to FIG. 31, the head 10 may be spaced upward from the base 20. A user may pivot the head 10. A pivot axis may intersect the head 10 while passing through the center of the head 10, and may be defined by the ball 41S (see FIG. 15). Referring to the left view of FIG. 31, the head 10 may be placed in a horizontal mode. Referring to the right view of FIG. 32, the head 10 may be placed in a vertical mode.

Referring to FIG. 32, a user may tilt the head 10. A tilt axis of the head 10 may be a tilt axis Axs defined by the ball 41S (see FIG. 15), or a first tilt axis Ax1, F1 (see FIG. 27) or a second tilt axis Ax2, F2 (see FIG. 27).

A user may swivel the head 10. A swivel axis of the head 10 may be a swivel axis Ays defined by the ball 41S (see FIG. 15), or a swivel axis Ay defined by the vertical pin 42P (see FIG. 16).

A user may pivot the head 10. A pivot axis of the head 10 may be a pivot axis Azs defined by the ball 41S (see FIG. 15).

The height of the head 10 may be adjusted by adjusting the length of the pole 30.

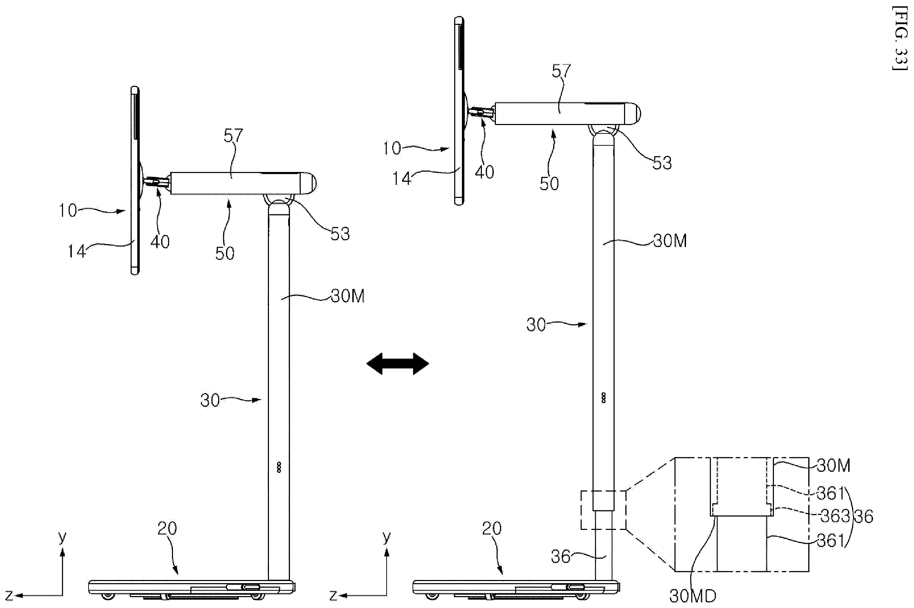

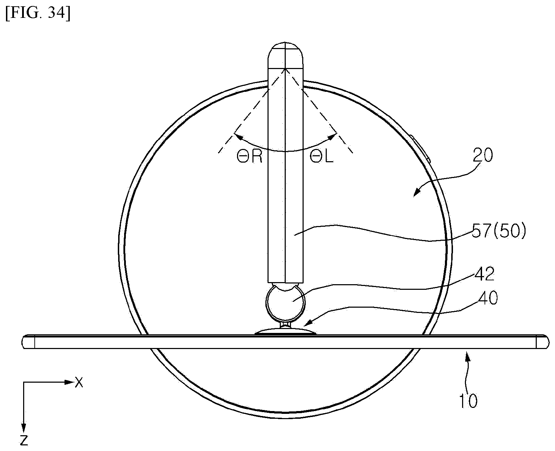

Referring to FIGS. 33 and 34, a catch 363 of the inner sleeve 36 may protrude from an outer surface of a cover part 361, and may extend in a circumferential direction of the cover part 361. An inner diameter of a lower end 30MD of an outer sleeve 30M may be equal to or greater than an outer diameter of the cover part 361 and may be smaller than the outer diameter of the cover part 361. Accordingly, upward movement of the outer sleeve 30M may be restricted as the lower end 30MD of the outer sleeve 30M is locked by the catch 363.

The outer sleeve 30M may rotate to the left or right while the lower end 30MD of the outer sleeve 30M is locked by the catch 363. For example, the rotation of the outer sleeve 30M may be restricted as a projection (not shown) formed on the inside of the outer sleeve 30M contacts a projection (not shown) formed on the catch 363. For example, the outer sleeve 30M may rotate to the left by a predetermined angle θL (e.g., 25 degrees), and the outer sleeve 30M may rotate to the right by a predetermined angle θR (e.g., 25 degrees).

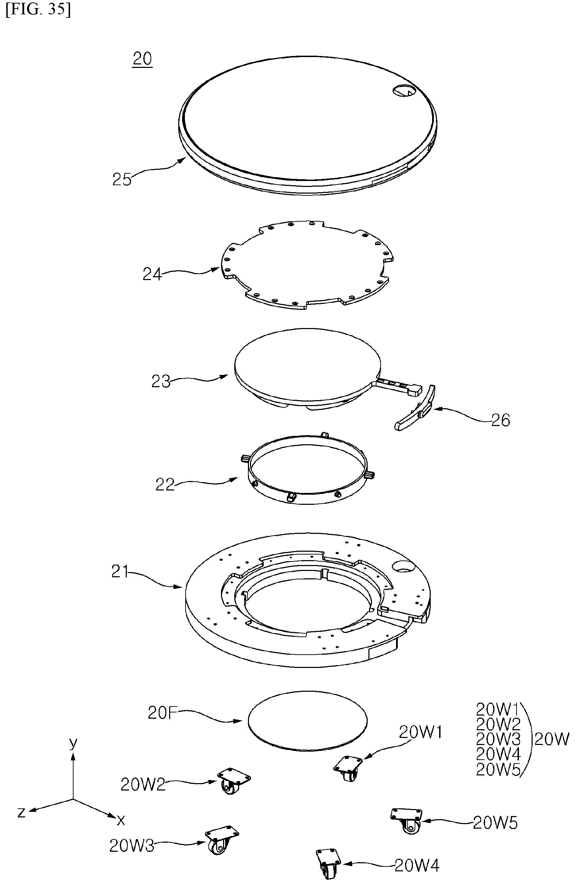

Referring to FIG. 35, the base 20 may include a lower body 21, a foot 22, a guide 23, a plate 24, an upper body 25, a slider 26, a pad 20F, and a wheel 20W.

The lower body 21 may have a generally ring plate shape. The lower body 21 may be referred to as an inner body 21 or an inner case 21.

The foot 22 may have a generally round tray shape. The foot 22 may be inserted into a hole of the lower body 21. The foot 22 may be referred to as an anchor 22, a moving member 22, or an operating part 22.

The guide 23 may be disposed over the foot 22. The guide 23 and the foot 22 may be inserted into the hole of the lower body 21.

The slider 26 may extend along the circumference of the guide 23 and may be coupled to a lateral surface of the guide 23.

The plate 24 may be disposed on or above the guide 23 and may be coupled to an upper surface of the lower body 21.

The upper body 25 may cover the lower body 21 and may be removably coupled to the lower body 21. The upper body 25 may be referred to as an outer body 25 or an outer case 25.

The pad 20F may be coupled or attached to the lower surface of the foot 22. The pad 20F may include a material, such as rubber, silicone, resin, or urethane.

The wheel 20W may be coupled to the lower surface of the lower body 21. For example, a plurality of wheels 20W1, 20W2, 20W3, 20W4, and 20W5 may be adjacent to the circumference of the lower body 21 and may be spaced apart from each other along the circumference of the lower body 21.

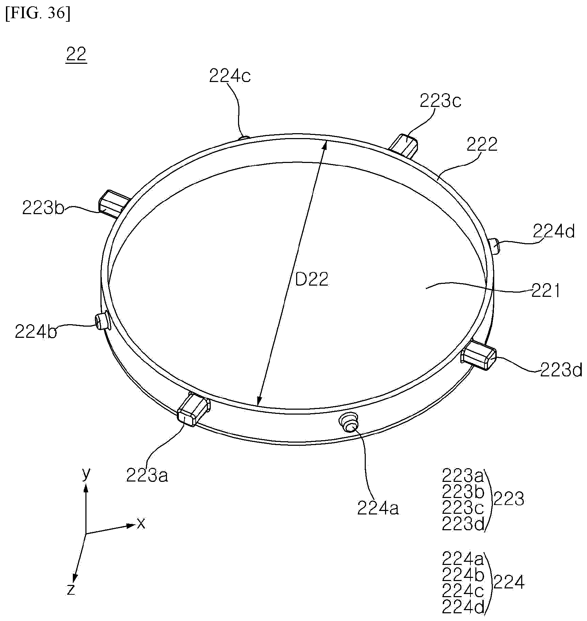

Referring to FIG. 36, the foot 22 may include a bottom 221 and a side wall 222. The bottom 221 may have a circular plate shape. The side wall 222 may protrude upward from the circumference of the bottom 221 and may extend along the circumference of the bottom 221.

A fixing part 223 may protrude from the side wall 222. The fixing part 223 may have a rectangular prism shape. For example, a plurality of fixing parts 223 may be spaced apart from each other along the side wall 222. For example, four fixing parts 223a, 223b, 223c, and 223d may be spaced 90 degrees apart from each other.

A projection 224 may protrude from the side wall 222 and may be spaced apart from the fixing part 223. A length of the projection 224 may be smaller than a length of the fixing part 223. For example, a plurality of projections 224 may be spaced apart from each other along the side wall 222. The projections 224 and the fixing parts 223 may be alternately arranged. For example, four projections 224a, 224b, 224c, and 224d may be spaced 90 degrees apart from each other. A first projection 224a may be disposed between a fourth fixing part 223d and a first fixing part 223a. A second projection 224b may be disposed between the first fixing part 223a and a second fixing part 223b. A third projection 224c may be disposed between the second fixing part 223b and a third fixing part 223c. A fourth projection 224d may be disposed between the third fixing part 223c and the fourth fixing part 223d.

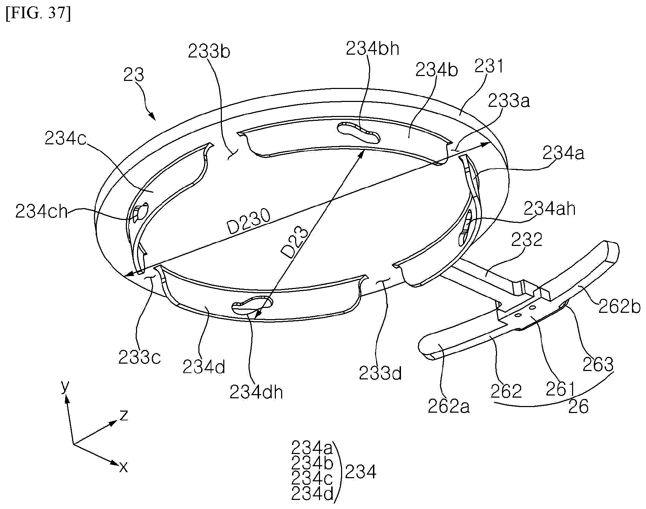

Referring to FIG. 37, the guide 23 may include a top 231 and a guide wall 234. The top 231 may have a circular plate shape. The guide wall 234 may protrude downward from the lower surface of the top 231 and may extend along the circumference of the top 231. For example, a plurality of guide walls 234 may be spaced apart from each other along the circumference of the top 231. For example, four guide walls 234a, 234b, 234c, and 234d may be spaced 90 degrees apart from each other.

A first guide wall 234a may extend in an arc and may be spaced apart from the circumference of the top 231. A first guide slot 234ah may be formed by penetrating the first guide wall 234a in a thickness direction of the first guide wall 234a, and may extend in a direction corresponding to a longitudinal direction of the first guide wall 234a.

A second guide wall 234b may extend in an arc and may be spaced apart from the circumference of the top 231. The second guide wall 234b may be spaced apart from the first guide wall 234a in a circumferential direction of the top 231, and a first gap 233a may be formed between the second guide wall 234b and the first guide wall 234a. A second guide slot 234bh may be formed by penetrating the second guide wall 234b in a thickness direction of the second guide wall 234b, and may extend in a direction corresponding to a longitudinal direction of the second guide wall 234b.

A third guide wall 234c may extend in an arc and may be spaced apart from the circumference of the top 231. The third guide wall 234c may be spaced apart from the second guide wall 234b in a circumferential direction of the top 231, and a second gap 233b may be formed between the third guide wall 234c and the second guide wall 234b. A third guide slot 234ch may be formed by penetrating the third guide wall 234c in a thickness direction of the third guide wall 234c, and may extend in a direction corresponding to a longitudinal direction of the third guide wall 234c.

A fourth guide wall 234d may extend in an arc and may be spaced apart from the circumference of the top 231. The fourth guide wall 234d may be spaced apart from the third guide wall 234c in a circumferential direction of the top 231, and a third gap 233c may be formed between the fourth guide wall 234d and the third guide wall 234c. A fourth gap 233d may be formed between the first guide wall 234a and the fourth guide wall 234d. A fourth guide slot 234dh may be formed by penetrating the fourth guide wall 234d in a thickness direction of the fourth guide wall 234d, and may extend in a direction corresponding to a longitudinal direction of the fourth guide wall 234d.

A diameter D230 of the top 231 may be greater than a diameter D22 (see FIG. 36) of the foot 22. In a radial direction of the top 231, a distance D23 between the guide walls 234 may be greater than or equal to the diameter D22 of the foot 22.

A bar 232 may protrude from a lateral surface (circumferential surface) of the top 231 in the radial direction of the top 231. The bar 232 may be referred to as an arm 232 or a rod 232.

The slider 26 may be opposite the top 231 with respect to the bar 232. The slider 26 may extend in the radial direction of the top 231. The slider 26 may include a coupling part 261, a body 262, and a button 263. The body 262 may extend from the bar 232 in both directions and may include a first part 262a and a second part 262b. The coupling part 261 may be formed at the center of an inner surface of the body 262 and may be coupled to a distal end of the bar 232 by a fastening member such as a screw. The button 263 may be formed at the center of an outer surface of the body 262 and may be opposite the coupling part 261 with respect to the body 262.

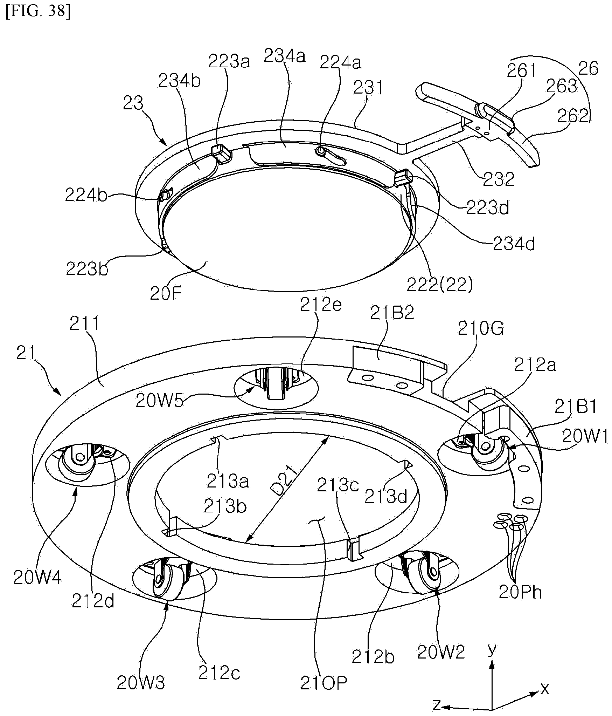

Referring to FIGS. 37 and 38, the guide 23 may be disposed over the foot 22. The guide wall 234 may surround a portion of the side wall 222.

The first fixing part 223a may be disposed in the first gap 233a between the second guide wall 234b and the first guide wall 234a. The first gap 233a may be greater than the width or thickness of the first fixing part 233a. The second fixing part 223b may be disposed in the second gap 233b between the third guide wall 234c and the second guide wall 234b. The second gap 233b may be greater than the width or thickness of the second fixing part 233b. The third fixing part 223c may be disposed in the third gap 233c between the fourth guide wall 234d and the third guide wall 234c. The third gap 233c may be greater than the width or thickness of the third fixing part 233c. The fourth fixing part 223d may be disposed in the fourth gap 233d between the first guide wall 234a and the fourth guide wall 234d. The fourth gap 233d may be greater than the width or thickness of the fourth fixing part 233d.

The first projection 224a is inserted into the first guide slot 234ah and is movable along the first guide slot 234ah. The second projection 224b is inserted into the second guide slot 234bh and is movable along the second guide slot 234bh. The third projection 224c is inserted into the third guide slot 234ch and is movable along the third guide slot 234ch. The fourth projection 224d is inserted into the fourth guide slot 234dh and is movable along the fourth guide slot 234dh.

A diameter of the pad 20F may be smaller than or equal to the bottom 221 (see FIG. 36). The pad 20F may be coupled or attached to the lower surface of the bottom 221 (see FIG. 36). The pad 20F may include a material such as rubber, silicone, resin, or urethane.

A hole 21OP of the lower body 21 may be formed at the center of the lower body 21. A diameter D21 of the hole 21OP may be greater than or equal to a diameter D23 (see FIG. 37) of an imaginary circle on which the guide walls 234 are located.

Insertion grooves 213a, 213b, 213c, and 213d may be formed at a portion of the lower body 21 that defines the perimeter of the hole 21OP. The insertion grooves 213a, 213b, 213c, and 213d may have shapes corresponding to the fixing parts 223a, 223b, 223c, and 223d. The first fixing part 223a may be inserted into a first insertion groove 213a. The second fixing part 223b may be inserted into a second insertion groove 213b. The third fixing part 223c may be inserted into a third insertion groove 213c. The fourth fixing part 223d may be inserted into a fourth insertion groove 213d. Accordingly, the lower body 21 may limit rotation of the foot 22 about an axis (y axis) that is parallel to a vertical direction.

The guide wall 234 and the projection 224 may be adjacent to or in contact with the portion of the lower body 21 that defines the perimeter of the hole 21OP.

The diameter D230 of the top 231 may be greater than the diameter D21 of the hole 21OP. A portion of the top 231 that is positioned outside the guide wall 234 may be disposed on the lower body 21. That is, the guide 23 and the foot 22 coupled thereto may be engaged with the lower body 21.

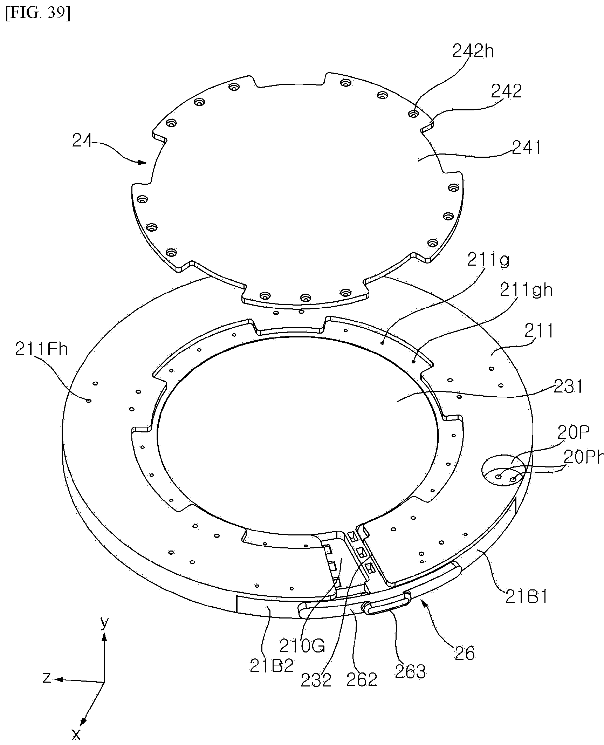

Referring to FIGS. 38 and 39, a ring 211 may be a portion of the lower body 21 that is positioned outside the top 231. A seating portion 210G may be formed by being recessed from an upper surface of the ring 211 and may extend from an inner circumference to an outer circumference of the ring 211.

The bar 232 may be disposed on the seating portion 210G. A width of the bar 232 may be smaller than a width of the seating portion 210G. Supoorters 21B1 and 21B2 may be coupled to a lower surface of the ring 211 and may support the inside of the body 262. Accordingly, the slider 26 may move smoothly.

The plate 24 may cover the top 231 and may be disposed on the top 231. A coupling recess 211g may be formed by being recessed from the upper surface of the ring 211 and may be disposed parallel to the top 231. A coupling portion 242 may protrude from the circumference of a cover part 241 of the plate 24 that overlaps the top 231 and may be seated on the coupling recess 211g. A fastening member, such as a screw, may pass through a hole 242h of the coupling portion 242 to be fastened into a hole 211gh of the coupling recess 211g. Accordingly, the plate 24 may be coupled to the ring 211.

A recessed portion 20P may be formed by being recessed from the upper surface of the ring 211 and may be adjacent to the circumference of the ring 211. The aforementioned second hole 20Ph may be formed in the recessed portion 20P.

Meanwhile, a plurality of mounting recesses 212a, 212b, 212c, 212d, and 212e may be formed in the lower surface of the ring 211. The plurality of wheels 20W1, 20W2, 20W3, 20W4, and 20W5 may be mounted in the plurality of mounting recesses 212a, 212b, 212c, 212d, and 212e, respectively.

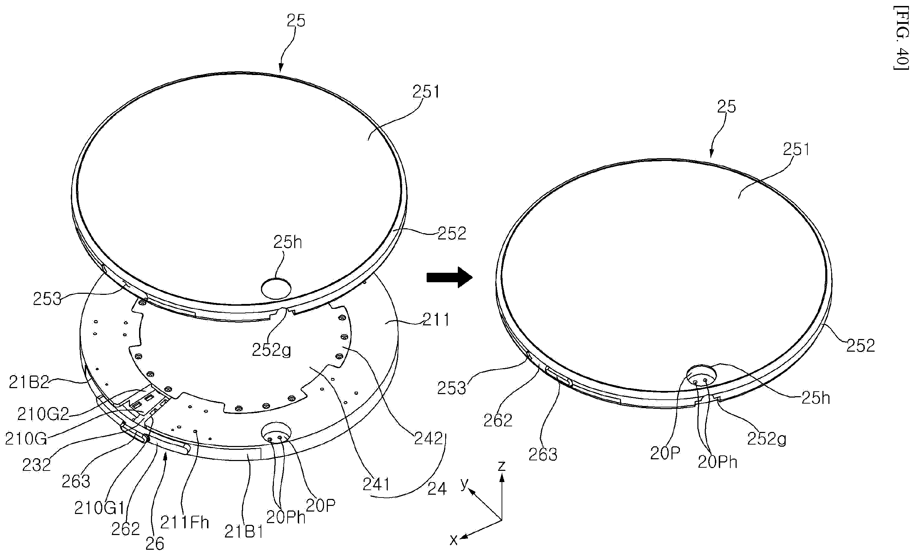

Referring to FIG. 40, the upper body 25 may include a top part 251 and a side part 252. The top part 251 may cover the plate 24 and the ring 211. The side part 252 may cover a lateral surface of the ring 211. The upper body 25 may be removably coupled to the plate 24 and/or the ring 211 by hook coupling, latch coupling, or screw fastening, and the like.

A hole 25h may be formed in the top part 251 and may be aligned with the aforementioned recessed portion 20P. A recess 252g may be formed in the side part 252 and may be adjacent to the hole 25h. A jack CWb of the power cable CW may be inserted into the recess 252g. For example, the jack CWb of the power cable CW may be inserted into the recess 252g by the magnetic force of a magnet. A slot 253, in which the button 263 is disposed, may be formed in the side part 252. A length of the slot 253 may correspond to a width of the seating portion 210G, and the button 263 is movable along the slot 253.

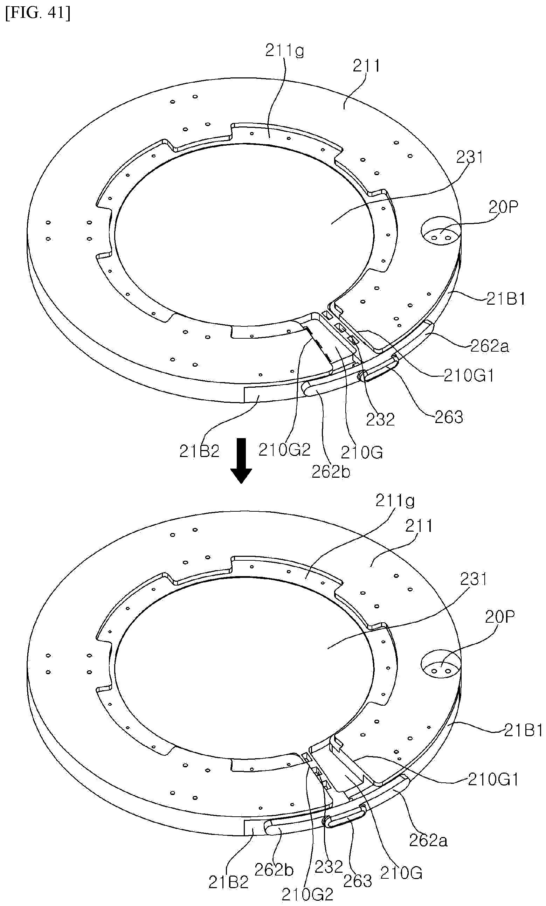

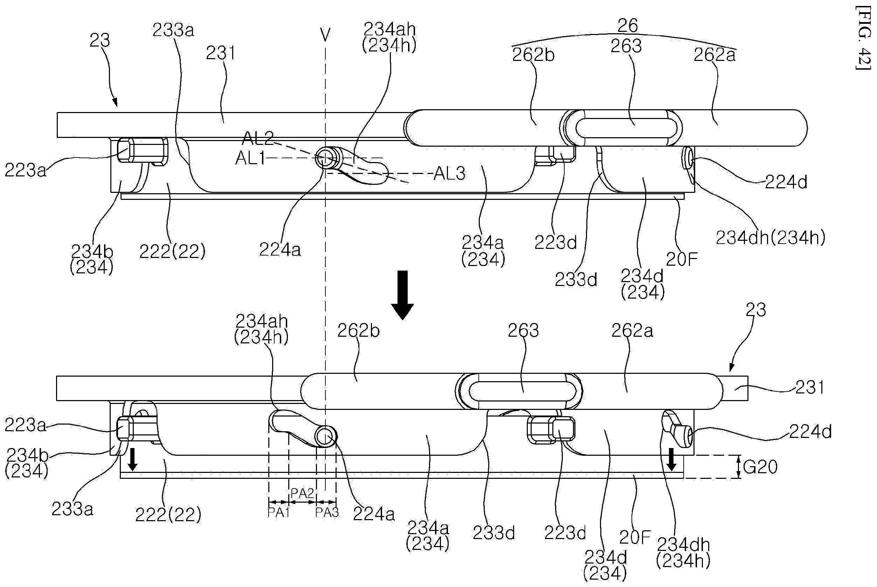

Referring to FIGS. 41 and 42, the plurality of guide slots 234ah, 234bh, 234ch, and 234dh may have the same shape. A guide slot 234h may include a first path PA1, a second path PA2, and a third path PA3.

The first path PA1 may extend in a circumferential direction of the guide 23 which is a longitudinal direction of the guide wall 234 (see AL1 of FIG. 42) and may be disposed closer to the upper end than the lower end of the guide wall 234.

The third path PA3 may extend in the circumferential direction of the guide 23 which is the longitudinal direction of the guide wall 234 (see AL3 of FIG. 42) and may be disposed closer to the lower end than the upper end of the guide wall 234. The first path PA1 and the third path PA3 may be spaced apart from each other in the circumferential direction of the guide 23.

The second path PA2 may extend in a direction intersecting the first path PA1 and the third path PA3 (see AL2 of FIG. 42) and may connect the first path PA1 and the third path PA3. The first path PA1 may extend from one end of the second path PA2 in a first direction, and the third path PA3 may extend from another end of the second path PA2 in a second direction. The first direction and the second direction may be opposite each other in the circumferential direction of the guide 23. The guide slot 234h may be bent between the second path PA2 and the first path PA1 and between the second path PA2 and the third path PA3. The first path PA1 and the third path PA3 may be referred to as horizontal paths PA1 and PA3, and the second path PA2 may be referred to as an inclined path PA2.

Stepped portions 210G1 and 210G2 may be formed between the ring 211 and the seating portion 210G. A first stepped portion 210G1 and a second stepped portion 210G2 may be opposite each other with respect to the bar 232. The bar 232 may move between the first stepped portion 210G1 and the second stepped portion 210G2. The first stepped portion 210G1 and the second stepped portion 210G2 may restrict movement of the bar 232.

When the bar 232 contacts the first stepped portion 210G1 (see the upper view of FIG. 41), the projection 224 may be located on the first path PA1 (see the upper view of FIG. 42). In this case, the guide slot 234h is bent between the first path PA1 and the second path PA2, such that the projection 224 may stay on the first path PA1 under an external force of less than or equal to a predetermined level. When the bar 232 moves from the first stepped portion 210G1 toward the second stepped portion 210G2, the guide wall 234 may move in a first rotation direction, and the projection 224 may move from the first path PA1 to the second path PA2 and the third path PA3. In this case, the fixing parts 223a, 223b, 223c, and 223d are inserted into the insertion grooves 213a, 213b, 213c, and 213d so as to be vertically movable, such that the projection 224 may move down along a vertical line V. Accordingly, in response to movement of the bar 232, the foot 22 may be lowered by a predetermined distance (see G20 of FIG. 42). For example, the distance G20 may be about 5 mm. Meanwhile, the movement of the guide wall 234 may be restricted as the fixing parts 223a, 223b, 223c, and 223d collide with the guide wall 234.

When the bar 232 contacts the second stepped portion 210G2 (see the lower view of FIG. 41), the projection 224 may be located on the third path PA3 (see the lower view of FIG. 42). In this case, the guide slot 234h is bent between the third path PA3 and the second path PA2, such that the projection 224 may stay on the third path PA1 under an external force of less than or equal to a predetermined level. When the bar 232 moves from the second stepped portion 210G2 toward the first stepped portion 210G1, the guide wall 234 may move in a second rotation direction opposite to the first rotation direction, and the projection 224 may move from the third path PA3 to the second path PA2 and the first path PA1. In this case, the fixing parts 223a, 223b, 223c, and 223d are inserted into the insertion grooves 213a, 213b, 213c, and 213d so as to be vertically movable, such that the projection 224 to move up along a vertical line V. Accordingly, in response to movement of the bar 232, the foot 22 may be lifted by a predetermined distance (see G20 of FIG. 42). For example, the distance G20 may be about 5 mm. Meanwhile, the movement of the guide wall 234 may be restricted as the fixing parts 223a, 223b, 223c, and 223d collide with the guide wall 234.

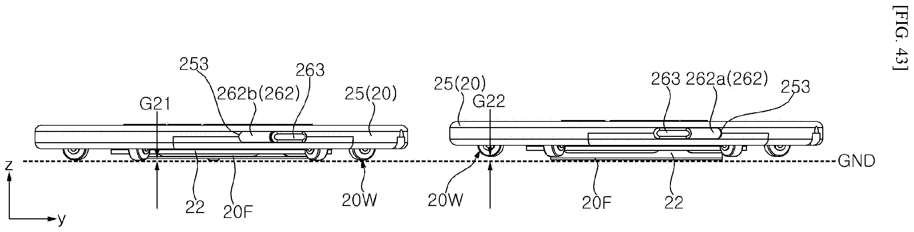

Referring to FIG. 43, when the button 263 is located at a first end of the slot 253, the foot 22 may be lifted to the maximum (see the upper view of FIG. 41 and the upper view of FIG. 42). In this case, the wheel 20W is located on the ground GND, while the pad 20F may be lifted up from the ground GND by a predetermined distance G21. The display device may be in a movement mode.

When the button 263 is located at a second end of the slot 253, the foot 922 may be lowered to the maximum (see the lower view of FIG. 41 and the lower view of FIG. 42). In this case, the pad 20F is located on the ground GND, while the wheel 20W may be lifted up from the ground GND by a predetermined distance G22. Alternatively, both the wheel 20W and the pad 20F may be located on the ground GND. The display device may be in a stationary mode.

Accordingly, a user may move the button 263 to move the base 20 on the ground GND using the wheel 20W (see the left view of FIG. 43) or may bring the foot 22 into contact with the ground GND to fix the base 20 to the ground GND (see the right view of FIG. 43). When the pad 20F contacts the ground GND, the base 20 may not slip from the ground GND under an external force of less than or equal to a predetermined level.

Referring to FIGS. 1 to 43, a display device according to an aspect of the present disclosure may include: a head including a display panel; and a stand including a base and supporting the head, wherein the base includes: a wheel mounted on a lower surface of the base and protruding from the lower surface; and a foot spaced apart from the wheel and coupled to the base so as to be vertically movable, wherein a protruding length of the foot protruding from the lower surface of the base may be variable.

The protruding length of the foot may be smaller or greater than a protruding length of the wheel.

The base may further include a guide coupled to the base so as to be movable in a circumferential direction of the base, wherein the foot may be coupled to the guide so as to be vertically movable.

The base may further include a lower body which defines the lower surface of the base, which has a hole at which the foot is positioned, and to which the guide is rotatably coupled, wherein the foot may be coupled to the lower body so as to be vertically movable.

The lower body may have an insertion groove formed at a portion of the lower body that defines a boundary of the hole of the lower body, wherein the foot may include a fixing part protruding from a lateral surface of the foot, and inserted into the insertion groove so as to be vertically movable.

The guide may include: a top seated on the lower body; and a guide wall protruding from a lower surface of the top and surrounding the lateral surface of the foot, and having a guide slot, wherein the foot may include a projection protruding from the lateral surface of the foot, inserted into the guide slot, and movable along the guide slot.

The guide slot may include one end and the other end extending in a direction corresponding to a rotation direction of the guide, and having different heights in a vertical direction.

The guide slot may include: a first path extending in the rotation direction of the guide; a second path extending in a direction intersecting the rotation direction of the guide; and a third path extending in the rotation direction of the guide, wherein the first path may extend from one end of the second path in a first direction, wherein the third path may extend from the other end of the second path in a second direction opposite the first direction.

The guide slot may be bent between the second path and the first path and between the second path and the third path.

The guide wall may include a plurality of guide walls which are spaced apart from each other in the rotation direction of the guide, wherein the projection may include a plurality of projections coupled to the plurality of guide walls.

The guide may further include: a bar protruding from a lateral surface of the top in a radial direction of the top; and a slider opposite the top with respect to the bar and coupled to the bar, wherein the lower body may further include a seating portion formed at an upper surface of the lower body, on which the bar is seated, and having a greater width than the bar.

The slider may include a body extending from the bar in a circumferential direction of the lower body, wherein a lateral surface of the lower body may support the body.

The slider may include a button formed at an outer surface of the slider, wherein the base may further include: a plate disposed on the top and coupled to the upper surface of the lower body; and an upper body covering the lower body and removably coupled to the lower body, wherein the upper body may include a slot at which the button is disposed, and having a length corresponding to a movement path of the button.

The base may further include a pad coupled to a lower surface of the foot.

The stand may further include: a pole extending from the base and spaced apart from the head; and an arm extending in a direction intersecting the head and the pole, and connecting the head and the pole.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A display device comprising:
a head including a display panel; and
a stand including a base and supporting the head,
wherein the base comprises:
a wheel mounted on a lower surface of the base and protruding from the lower surface; and
a foot spaced apart from the wheel and coupled to the base so as to be vertically movable,
wherein a protruding length of the foot protruding from the lower surface of the base is variable.

2. The display device of claim 1, wherein the protruding length of the foot is smaller or greater than a protruding length of the wheel.

3. The display device of claim 1, wherein the base further comprises a guide coupled to the base so as to be movable in a circumferential direction of the base,
wherein the foot is coupled to the guide so as to be vertically movable.

4. The display device of claim 3, wherein the base further comprises a lower body which defines the lower surface of the base, which has a hole at which the foot is positioned, and to which the guide is rotatably coupled,
wherein the foot is coupled to the lower body so as to be vertically movable.

5. The display device of claim 4, wherein the lower body has an insertion groove formed at a portion of the lower body that defines a boundary of the hole of the lower body,
wherein the foot comprises a fixing part protruding from a lateral surface of the foot, and inserted into the insertion groove so as to be vertically movable.

6. The display device of claim 4, wherein the guide comprises:
a top seated on the lower body; and
a guide wall protruding from a lower surface of the top, surrounding the lateral surface of the foot, and having a guide slot,
wherein the foot comprises a projection protruding from the lateral surface of the foot, inserted into the guide slot, and movable along the guide slot.

7. The display device of claim 6, wherein the guide slot comprises one end and the other end extending in a direction corresponding to a rotation direction of the guide, and having different heights in a vertical direction.

8. The display device of claim 6, wherein the guide slot comprises:
a first path extending in the rotation direction of the guide;
a second path extending in a direction intersecting the rotation direction of the guide; and
a third path extending in the rotation direction of the guide,
wherein the first path extends from one end of the second path in a first direction,
wherein the third path extends from the other end of the second path in a second direction opposite the first direction.

9. The display device of claim 8, wherein the guide slot is bent between the second path and the first path and between the second path and the third path.

10. The display device of claim 6, wherein the guide wall comprises a plurality of guide walls which are spaced apart from each other in the rotation direction of the guide,
wherein the projection comprises a plurality of projections coupled to the plurality of guide walls.

11. The display device of claim 6, wherein the guide further comprises:
a bar protruding from a lateral surface of the top in a radial direction of the top; and
a slider opposite the top with respect to the bar and coupled to the bar,
wherein the lower body further comprises a seating portion formed at an upper surface of the lower body, on which the bar is seated, and having a greater width than the bar.

12. The display device of claim 11, wherein the slider comprises a body extending from the bar in a circumferential direction of the lower body,
wherein a lateral surface of the lower body supports the body.

13. The display device of claim 11, wherein the slider comprises a button formed at an outer surface of the slider,
wherein the base further comprises:
a plate disposed on the top and coupled to the upper surface of the lower body; and
an upper body covering the lower body and removably coupled to the lower body,
wherein the upper body comprises a slot at which the button is disposed, and having a length corresponding to a movement path of the button.

14. The display device of claim 1, wherein the base further comprises a pad coupled to a lower surface of the foot.

15. The display device of claim 1, wherein the stand further comprises:
a pole extending from the base and spaced apart from the head; and
an arm extending in a direction intersecting the head and the pole, and connecting the head and the pole.
